# NEW EUROPEAN PATENT SPECIFICATION

(11) **EP 2 262 188 B2**
(45) Date of publication and mention of the opposition decision: **12.04.2017**
(45) Mention of the grant of the patent: 31.10.2012
(21) Application number: 10159693.0
(22) Date of filing: 12.04.2010
(51) Int. Cl.: H04W 40/12

(54) **Method and apparatus for disseminating a data packet via multi-hop communication in a communication network**
Verfahren und Vorrichtung zur Verteilung eines Datenpaketes via Multihopkommunikation in einem Kommunikationsnetzwerk
Procédé et appareil pour diffuser un paquet de données via communication à sauts multiples dans un réseau de communication

(30) Priority: 12.06.2009 EP 09162641
(43) Date of publication of application: 15.12.2010
(60) Divisional application: 12190648.1
(73) Proprietor: Hitachi, Ltd., Tokyo 100-8280 (JP)
(72) Inventor: Menouar, Hamid, 06160, Antibes (FR); Mariyasagayam Nestor, 06560, Valbonne (FR); Lenardi, Massimiliano, 06600, Antibes (FR); Horita, Yuki, 06560, Golfe Juan (FR)
(74) Representative: MERH-IP Matias Erny Reichl Hoffmann Patentanwälte PartG mbB

(56) References cited:
- WO-A-2009/018835
- BERNSEN J ET AL: "Unicast routing protocols for vehicular ad hoc networks: A critical comparison and classification" PERVASIVE AND MOBILE COMPUTING, ELSEVIER, NL, vol. 5, no. 1, 1 February 2009 (2009-02-01), pages 1-18, XP025883192 ISSN: 1574-1192 [retrieved on 2008-09-07]
- STEPHAN EICHLER ED - UMALI E M ET AL: "MDRP: A Content-aware Data Exchange Protocol for Mobile Ad Hoc Networks" WIRELESS COMMUNICATION SYSTEMS, 2007. ISWCS 2007. 4TH INTERNATIONAL SYMPOSIUM ON, IEEE, PISCATAWAY, NJ, USA, 1 October 2007 (2007-10-01), pages 742-746, XP031166868 ISBN: 978-1-4244-0978-5

## Description

The present application claims priority of European patent application No. 09162641.6 filed on June 12, 2009.

### Field of the Invention

The present invention relates to a method and an apparatus for disseminating a data in a communication network.

### Background of the Invention

Non-infrastructure network technologies, such as for example ad-hoc networks and sensor networks, are getting popular more and more. Particularly, in the field of Intelligent Transport Systems (ITS), distributed wireless communication technologies between vehicles (V2V) or between vehicles and infrastructures (V2I) have been actively discussed worldwide, for improving road safety, traffic efficiency and comfort and/or entertainment for drivers and passengers, see, e.g. document BERNSEN J ET AL. "Unicast Routing Protocols for vehicular ad hoc networks: A critical comparison and classification" PERVASIVE AND MOBILE COMPUTING, ELSEVIER, NL, vol. 5 no. 1, 2009-02-01, pages 1-18.

A Mobile Ad-hoc NETwork (MANET) is a communication network formed by a plurality of network nodes connected via wireless communications by means of radio communication means. These radio communication means may include, but are not limited to, WLAN, Bluetooth and/or Infrared interfaces. Every network node participating in a MANET is configured to act as a client, server or relay for communications established among a set of network nodes. The topology of a MANET is generally arbitrary and every network node can move freely and possibly also in an unpredictable manner. Generally, the size of a MANET is kept relatively small, but the number of MANET network nodes is basically unlimited and can potentially grow without any limit.

When most of the MANET nodes are *vehicles* or at least mounted to vehicles such as cars or the like (under the assumption that wireless radio means are installed on the vehicle), such networks are generally referred to as Vehicular MANETs, or also *VANET.* Of course, some nodes of a VANET can also be stationary nodes or substantially stationary nodes such as e.g. nodes mounted on cross-lights, nodes mounted on roadside gateways, VANET extensors or even devices carried by pedestrians (e.g. cell phones) as quasi-stationary nodes. Position services like GPS or Galileo may be used for node tracking and position related services. The VANET node mobility is generally constrained by specific paths such as a traffic network comprising roads and traffic intersections or the like, the topology of which may be, however, digitally available e.g. via navigation data for navigation systems.

Such vehicular communication networks, in which nodes potentially have high mobility, require advanced access control, topology maintenance, and routing procedures for supporting the data communications for those services. One of characteristic technologies in this field is a geographical-based routing/dissemination method, in which a data message or data packet is delivered based on position information of vehicles and its destination.

When disseminating data within a geographical area by wireless communication, the data message is delivered by a data dissemination method according to one of two basic data dissemination principles: (a) the so-called line-forwarding dissemination and (b) the so-called area-dissemination. A line-forwarding dissemination method is applied when the target geographical area or the destination point is located farther than the radio range (i.e. communication range) of the node sending the data in order to deliver the message to the target area/destination point or at least towards the target area/destination point. On the other hand, area dissemination methods are applied when the node sending the data is already located in the target area or located close to a destination point.

Data dissemination methods must satisfy sufficiently and as much as possible the requirements which are required from and for applications which need the data to be disseminated. Basic requirements from such applications are for example high reliability (e.g. data delivery ratio) and low delay in the data dissemination;

see, e.g., document EICHLER ET AL : "MDRP: A Content-aware Data Exchange Protocol for Mobile Ad-Hoc Networks" WIRELESS COMMUNICATION SYSTEMS, 2007, pages 742-746.

From EP 1 788 749 A1, there is known an dissemination method (i.e. a MHVB protocol or multi-hop vehicular broadcast protocol) for disseminating information in vehicular ad hoc network by flooding the data packets among vehicles based on their position information. This relates to a method for the above-mentioned area-dissemination concept. A further development of the method shown in EP 1 788 749 is shown in the article *"*Enhanced Multi-Hop Vehicular Broadcast (MHVB) for Active Safety Applications" by M. N. Mariyasagayam, T. Osafune, and M. Lenardi, (published in ITST 2007, 7th International Conference on ITS Telecommunications, Sophia Antipolis, France, June 2007), in the following also referred to as Mariyasagayam et al. This published article Mariyasagayam et al. describes a receiver-based area-dissemination type data dissemination process for selecting a forwarding node based on its relative position from the sending node utilizing a forwarding suppression algorithm to suppress unnecessary network consumption.

Contrary to the concept of area-dissemination, according to the concept of line-forwarding dissemination, a data packet shall be forwarded to a predetermined destination position or target destination area. Information is to be disseminated from an original source position to a destination position passing through intermediate nodes via multi-hop communications. Such intermediate nodes are referred to as forwarding nodes since they receive the data packet from a sending node and send it to their neighbor nodes in order to forward the data packet (the term "forwarding" as used throughout this specification means sending data to other nodes which data was received from a sending node, i.e. from a source node or also from a previous forwarding node).

According to a known line-forwarding dissemination concept as described in the article *"*Greedy Perimeter Stateless Routing for Wireless Networks" by Karp, B. and Kung, H.T. (published in Proceedings of the Sixth Annual ACM/IEEE International Conference an Mobile Computing and Networking (MobiCom 2000), Boston, MA, August, 2000, pp. 243-254), a so-called GPSR (Greedy Perimeter Stateless Routing) protocol is utilized for data packet forwarding. According to such GPSR protocols or greedy forwarding protocols, the sending node itself selects in advance the next forwarding node among its own neighbor nodes (so-called sender-based forwarder selection) and forwards the data packet to the selected forwarding node. Here, the neighbor node which is located closest to the destination is selected as next forwarder by the sending node.

However, according to such a sender-based forwarding node selection method for line-dissemination, the sending node must know the positions of all neighbor nodes. Accordingly, such sender-based forwarding node selection methods always rely on position information of neighbor nodes. If position information of neighbor nodes is not available or too old, such methods do not work properly. Also, if the selected forwarding node fails to receive the data packet, the data packet is lost during the forwarding procedure and cannot reach the destination of data dissemination according to such line-dissemination sender-based forwarding node selection methods.

### Summary of the Invention

In light of the above-mentioned problems of the sender-based line-forwarding dissemination method, it is an object of the present invention to provide a method and an apparatus for disseminating data such as data packets towards a destination (i.e. a line-dissemination method) in a communication network which allows reliable, efficient and robust forwarding in the dissemination of data to or towards a destination (destination position or destination area), i.e. which allows to efficiently realize line-forwarding data dissemination towards a predetermined destination at increased data delivery reliability. Further, it is an object of the present invention to provide a method and an apparatus for disseminating data in a communication network which functions properly even in case no position information about neighbor nodes is available. Furthermore, it is an object of the present invention to provide a method and an apparatus for disseminating data in a communication network at improved information delivery reliability and at the same time with a low network overhead. Also, it is an object of the present invention to reduce a number of redundant retransmissions of packets in the network so as to enable consumption of lesser bandwidth within the network.

For attaining the objects of the present invention, according to the present invention, a method for disseminating a data packet towards a destination in a communication network, an apparatus for disseminating data towards a destination in a communication network, and a computer program product according to the independent claims are proposed. Dependent claims relate to preferred embodiments of the present invention.

The present invention relates to a method and an apparatus for disseminating a data such as a data packet to or towards a destination in a communication network, in particular a mobile ad-hoc network MANET or a vehicular mobile ad-hoc network VANET, comprising a plurality of network nodes, in particular mobile nodes. The present invention relates to communication networks such as ad-hoc networks comprising a plurality of network nodes. The communication network can be a mobile ad-hoc network and also a dynamic ad-hoc network. The network may be IP-based but can also be non-IP based.

In particular, the present invention preferably relates to a method and an apparatus for data dissemination e.g. in a mobile ad-hoc network MANET or a vehicular mobile ad-hoc network VANET by flooding data packets among nodes of the communication network for information dissemination to or towards a destination via so-called multi-hop communications, where information or a corresponding data packet is forwarded from a node of the network to a neighbor node in the one-hop range of the node so that the data packet can be forwarded again from the neighbor node to a next forwarding node in the one-hop range of the neighbor node, i.e. a neighbor node of the neighbor node. The present invention relates to the forwarding of data (e.g. forwarding of data packets) among nodes of the communication network and a selection of a next forwarding node which shall forward the data packet.

At a first receiving node, a data packet which has been sent from a sending node is received, wherein the data packet may comprise sending position data which indicates a position of the sending node, and first receiver position data may be determined, wherein the first receiver position data may indicate a position of the first receiving node.

According to the invention, a line-forwarding dissemination method is provided in which a selection of a next forwarding node can be performed based on a receiver-based method, i.e. the node receiving the data packet decides whether to forward the data packet or rather to refrain from forwarding the data packet.

According to the present invention, a method for disseminating data in a communication network comprising a plurality of network nodes comprises:
- receiving, at a first receiving node, a data packet sent from a sending node which shall be forwarded to a destination (e.g. destination point or destination area),
- determining a position of the first receiving node,
- determining the positions of neighbor nodes of the first receiving node and/or the density of neighbor nodes of the first receiving node,
- determining a forwarding area on the basis of a position of the destination,
- determining if the first receiving node is located inside the determined forwarding area, and
- determining, at the first receiving node (i.e. receiver-based), whether to forward the data packet so that it can be received at one or more neighbor nodes of the first receiving node, on the basis of a determination if the first receiving node is located inside the determined forwarding area, wherein the forwarding area is determined such that the size of the forwarding area is determined based on the determined positions of neighbor nodes of the first receiving node and/or the density of neighbor nodes of the first receiving node. Preferably, it is determined whether to forward the data packet, in particular, whether to forward the data packet to one or more neighbor nodes of the first receiving node (this may include sending methods such as broadcast, unicast or also multicast).

For example, such a method can be realized as a method for disseminating a data packet towards a destination, in particular via multi-hop communication, in a wireless communication network, in particular a mobile ad-hoc network, comprising a plurality of network nodes, the method comprises receiving, at a first receiving node, a data packet sent from a sending node, wherein the data packet comprises sending position data which indicates a position of the sending node, and/or determining first receiver position data, wherein the first receiver position data indicates a position of the first receiving node. Furthermore, the method for disseminating a data packet towards a destination via multi-hop communication in a communication network can be characterized by determining destination position data, wherein the destination position data indicates a position of the destination, determining a forwarding area based on the sending position data and the destination position data, and/or forwarding the data packet to neighbor nodes of the first receiving node, if the first receiving node is located inside the determined forwarding area.

The method is then provided such that a forwarding area is determined for selecting the next forwarding node which is located inside the forwarding area according to a receiver-based principle, wherein the forwarding area is determined based on the sending position data and the destination position data. This has the advantage that the forwarding area can be determined by the sending node or also by each receiving node which receives the data packet from the sending node (original sender or also a previous forwarding node that received the data packet from another node) independently, however, each node can determine the same or at least similar forwarding area since it can be based on the sending node position and the destination position. Accordingly, receiving nodes can decide themselves, whether they are located in the forwarding area or not and whether they shall forward the data packet as a next forwarder or rather refrain from forwarding the data packet.

Accordingly, the method allows for reliable, efficient and robust line forwarding dissemination towards a destination based on a receiver-based forwarding node selection, where a receiving node itself decides whether the data packet is to be forwarded or not after receiving the data packet (different from a sender-based forwarding node selection, where a sending node of sending node selects the next forwarding node), where disseminating a data packet towards a destination via multi-hop communication in a wireless communication network can be efficiently realized without the requirement that a sending node must have up-to-date knowledge about its neighbor nodes, e.g. without the requirement of a beaconing system. Furthermore, a method for disseminating data packet towards a destination via multi-hop communication in a communication network can be provided which allows reliable, efficient and robust forwarding of a data packet to a destination, i.e. which allows to efficiently realize line forwarding dissemination towards a predetermined destination at increased data delivery reliability and at the same time with a low network overhead.

Alternatively or in combination, such a method could be realized by a method for disseminating data in a communication network comprising a plurality of network nodes comprises:
- receiving, at a first receiving node, a data packet sent from a sending node which shall be forwarded to a destination (e.g. destination point or destination area),
- determining a position of the first receiving node,
- determining a forwarding area on the basis of a position of the destination and network topology information (such as e.g. navigation data indicating a topology of a road network),
- determining if the first receiving node is located inside the determined forwarding area, and
- determining, at the first receiving node, whether to forward the data packet on the basis of a determination if the first receiving node is located inside the determined forwarding area (e.g. forwarding to one or more neighbor nodes via broadcast, unicast or multicast).

The method is then provided such that a forwarding area is determined for selecting the next forwarding node which is located inside the forwarding area at the receiving node (i.e. receiver-based), wherein the forwarding area is determined on the basis of a position of the destination and network topology information (such as e.g. navigation data indicating a topology of a road network). This has the advantage that the forwarding area can be uniquely determined by the sending node. It can then be included in data sent to neighbor nodes so that receiving nodes can decide themselves, whether they are located in the forwarding area or not and whether they shall forward the data packet as a next forwarder or rather refrain from forwarding the data packet.

Accordingly, the method allows for reliable, efficient and robust line forwarding dissemination towards a destination based on a receiver-based forwarding node selection, where a receiving node itself decides whether the data packet is to be forwarded or not after receiving the data packet (different from a sender-based forwarding node selection, where a sending node of sending node selects the next forwarding node), where disseminating a data packet towards a destination via multi-hop communication in a wireless communication network can be efficiently realized without the requirement that a sending node has knowledge about its neighbor nodes, e.g. without the requirement of a beaconing system. Furthermore, a method for disseminating data packet towards a destination via multi-hop communication in a communication network is provided which allows reliable, efficient and robust forwarding of a data packet to a destination position, i.e. which allows to efficiently realize line forwarding dissemination towards a predetermined destination at increased data delivery reliability and at the same time with a low network overhead.

The following preferred features of the present invention refer to all of the above described aspects.

Preferably, the first receiving node forwards (i.e. sends) the data packet to one or more neighbor nodes of the first receiving node if is determined that the first receiving node is located inside the determined forwarding area. Accordingly, the first receiving node decides itself to be the next forwarding node and forwards the data packet, if it is located in the determined forwarding area. The sending/forwarding may be performed via broadcast, unicast or multicast.

Preferably, said determining the forwarding area is performed at the sending node, wherein forwarding area data sent from the sending node is preferably received at the first receiving node, said forwarding area data preferably indicating the determined forwarding area. Alternatively, it also advantageous if said determining the forwarding area is performed at the first receiving node as already described above.

Preferably, said determining the forwarding area is performed further based on the position of the sending node and/or network topology information. If said determining the forwarding area is performed at the first receiving node, the position of the sending node is preferably indicated by sender position data received at the first receiving node from the sending node so that determining the forwarding area is performed further based on the position of the sending node can be performed at the first receiving node. Said determining the forwarding area can also be performed further based on at least one of the position of the sending node, a position of a reference point (such as e.g. a reference point indicating an area or point of interest, e.g. the position of one or more intersections or the position of one or more stationary nodes), the position of one or more intersections or the position of one or more stationary nodes and/or network topology information. A determination involving a position of a reference point (such as e.g. a reference point indicating an area or point of interest, e.g. the position of one or more intersections or the position of one or more stationary nodes or also an area of a higher density or number of nodes), the position of one or more intersections or the position of one or more stationary nodes and/or network topology information is preferably performed at the sending node, but can also be performed at the first receiving node (e.g. if the receiving node has network topology information available or knows about points of interest such as e.g. one or more intersections of the traffic network or the position of one or more stationary nodes).

Preferably, the communication network is a vehicular mobile ad-hoc network comprising network nodes mounted to vehicles of a traffic network, wherein said network topology information preferably comprises navigation data indicating a traffic network topology of the traffic network and/or digital map data. Accordingly, the determination of the forwarding area can be performed not only based on positions of nodes but also based on knowledge about the mobility constraints of the nodes caused by the traffic network topology or geographical constraints. Then, it can be additionally accounted for traffic network topologies and geography of the surroundings, in which selecting a next forwarding node only based on node positions and the position of the destination might lead to dead ends in data dissemination due to the traffic network topology.

Preferably, the forwarding area is determined such that it covers an area of one or more traffic network intersections of the traffic network, the position of the one or more traffic network intersections being indicated by the navigation data. Accordingly, a next forwarding node can be selected form nodes being positioned on an intersection of the traffic network. Then, the forwarding area is preferably determined as a circular area being defined by a position of the center of the forwarding area and a radius of the forwarding area (can be e.g. indicated by forwarding area data).

Preferably, the destination position data indicating the position of the destination is comprised in the data packet. Accordingly, the destination position data and/or the position of the destination can be directly derived from the data contained in the data packet.

Preferably, the forwarding area is determined based on the position of the sending node (preferably indicated by sending position data), the position of the destination (preferably indicated by destination position data), and the communication range of the sending node.

Preferably, the forwarding area is directed from the position of the sending node towards the position of the destination. Accordingly, the forwarding area can be determined such that it is directed in the direction towards the destination to which the data packet shall be forwarded so that a forwarding node can be chosen which is located closer to the position of the destination. This allows for more efficient line forwarding dissemination since only receiving nodes which are located in the direction of the destination may be selected as forwarding node.

Preferably, the determined forwarding area substantially corresponds to a circular sector of the circular communication range of the sending node having the sending node in the center and preferably with a radius according to the communication range of the sending node. Accordingly, the forwarding area has an advantageous shape (e.g. larger area is covered in the farther distance of the sending node) and can be directed towards the destination, e.g. in that the line that splits the circular sector in half can be directed towards the destination position.

Preferably, the forwarding area is determined to be directed from the position of the sending node towards the position of the destination in that determining the forwarding area preferably comprises calculating a position of an geometrical intersection point which is the geometric intersection (here, the term geometrical intersection refers to a geometric intersection between two geometrical lines which is not to be misinterpreted as an intersection of a road network) between the border of the communication range of the sending node and a straight line between the position of the sending node and the position of the destination. Accordingly, determining the direction of the forwarding area towards the destination can be realized by an elementary calculation algorithm.

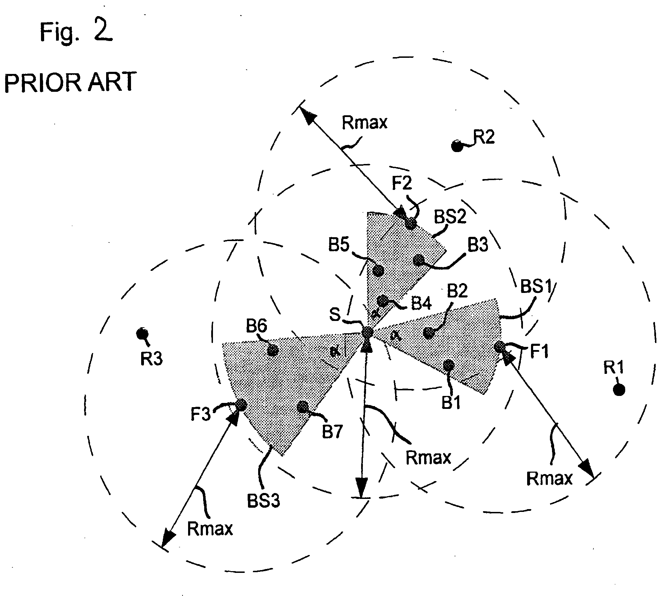

According to the claimed invention, the method comprises determining the positions of neighbor nodes of the first receiving node and/or the density of neighbor nodes of the first receiving node, wherein the forwarding area is determined such that the size of the forwarding area is determined based on the determined positions of neighbor nodes of the first receiving node and/or the density of neighbor nodes of the first receiving node. This provides the advantage that the size, e.g. absolute surface area, of the forwarding area can be determined in dependency of the neighbor node distribution and/or density of neighbor nodes around a receiving node. For example, if the number or density of neighbor nodes in the vicinity of the receiving node is high, the size of the forwarding sector can be selected large so as to increase the number of suppressed nodes so as to further reduce redundant transmissions in the network. However, when the number or density of neighbor nodes is low, the size of the forwarding area can be determined small so as to suppress less receiving nodes in order to further increase the data delivery reliability. This aspect can also be independently applied to the area-dissemination such as e.g. described below with reference to Fig. 2.

Preferably, the forwarding area substantially corresponds to a circular sector of the circular communication range of the sending node having the sending node in the center with a radius according to the communication range of the sending node, wherein determining the forwarding area preferably comprises determining the opening angle of the forwarding area based on the determined positions of neighbor nodes of the first receiving node, the density of neighbor nodes of the first receiving node, and/or based on a minimal opening angle value, e.g. preferably equal or larger than a predetermined minimal opening angle threshold value.

Preferably, the method further comprises determining the position of neighbor nodes of the first receiving node, when the first receiving node receives the data packet forwarded from a second receiving node after receiving the data packet from the sending node before forwarding the data packet, determining, whether the neighbor nodes of the first receiving node are located in the communication range of the second receiving node, and/or forwarding the data packet received from the sending node to neighbor nodes of the first receiving node, if the first receiving node is located inside the determined forwarding area and at least one of the neighbor nodes of the first receiving node is located outside the communication range of the second receiving node, or, instead of forwarding the data packet, refraining from forwarding the data packet to neighbor nodes of the first receiving node, if all neighbor nodes of the first receiving node are located inside the communication range of the second receiving node. Accordingly, this has the advantage that a receiving node, which receives the data packet a second time so as to be suppressed by a forwarding node, which already forwarded the data packet before the receiving node could forward the data packet, and the receiving node can decide to nevertheless forward the data packet in order to forward the data packet to nodes that could not receive the data packet from the forwarding node. This can further increase the data delivery reliability, where redundant transmissions are still avoided in that for example also the node that refuses to be suppressed has to be located inside the forwarding area.

Preferably, the method further comprises determining a first sender-receiver distance, wherein the first sender-receiver distance indicates a distance between the sending node and the first receiving node based on the sending position data and the second receiver position data, receiving, at a second receiving node, the data packet sent from the sending node, determining second receiver position data, wherein the second determined receiver position data preferably indicates the position of the second receiving node, and/or determining a second sender-receiver distance, wherein the second sender-receiver distance preferably indicates a distance between the sending node and the second receiving node based on the sending position data and the second receiver position data, wherein the first receiving node preferably forwards the data packet to the neighbor nodes of the first node, if the first sender-receiver distance is larger than the second sender-receiver distance, and/or wherein the second receiving node preferably refrains from forwarding the data packet, when the second receiving node receives the forwarded data packet from the first receiving node, preferably even if the second receiving node is located inside the determined forwarding area, or when the second receiving node receives the forwarded data packet from the first receiving node and if all neighbor nodes of the second receiving node are located in the communication range of the first receiving node, preferably even if the second receiving node is located inside the determined forwarding area.

Alternatively, according to another preferred aspect of the invention, the method further comprises determining a first destination-receiver distance, wherein the first destination-receiver distance indicates a distance between the position of the first receiving node and the position of the destination or between the position of the first receiving node and a position of an intermediate destination reference point, receiving, at a second receiving node, the data packet sent from the sending node, determining a position of the second receiving node, and/or determining a second destination-receiver distance, wherein the second destination-receiver distance indicates a distance between the position of the second receiving node and the position of the destination or between the position of the second receiving node and a position of an intermediate destination reference point, wherein the first receiving node preferably sends the data packet to one or more neighbor nodes of the first receiving node, if the first destination-receiver distance is smaller than the second destination-receiver distance, and wherein the second receiving node preferably refrains from forwarding the data packet, when the second receiving node receives the forwarded data packet from the first receiving node, even if the second receiving node is located inside the determined forwarding area, or when the second receiving node receives the forwarded data packet from the first receiving node and if all neighbor nodes of the second receiving node are located in the communication range of the first receiving node, even if the second receiving node is located inside the determined forwarding area.

The method according to the claimed invention comprises determining the positions of neighbor nodes of the first receiving node and/or the density of neighbor nodes of the first receiving node, wherein the size of the forwarding area is determined based on the determined positions of neighbor nodes of the first receiving node and/or the density of neighbor nodes of the first receiving node (a higher density of neighbor nodes preferably leading to a smaller size of the forwarding area). The forwarding area is preferably determined such that the opening angle of the forwarding sector angle is determined based on the determined positions of neighbor nodes of the first receiving node and/or the density of neighbor nodes of the first receiving node. Furthermore, the minimal value of the opening angle which may be determined is preferably limited by a predetermined threshold value so that the determined opening angle is preferably equal to or larger than the predetermined threshold value.

Preferably, the method according to the present invention further comprises determining a first sender-receiver distance, wherein the first sender-receiver distance preferably indicates a distance between the sending node and the first receiving node based on the sending position data and the first receiver position data, and/or determining a first time-to-send period based on the determined first sender-receiver distance, wherein forwarding the data packet to neighbor nodes of the first receiving node is performed, when the determined first time-to-send period expires after the time of receiving the data packet from the sending node and if the first receiving node is located inside the determined forwarding area. Preferably, as an alternative thereto, the method according to the present invention further comprises determining a first destination-receiver distance, wherein the first destination-receiver distance preferably indicates a distance between the position of the destination (or the position of an intermediate destination position) and the position of the first receiving node, and/or determining a first time-to-send period based on the determined first destination-receiver distance, wherein forwarding the data packet to neighbor nodes of the first receiving node is performed, when the determined first time-to-send period expires after the time of receiving the data packet from the sending node and if the first receiving node is located inside the determined forwarding area.

Further preferably, the first receiving node refrains from forwarding the data packet, if the first receiving node receives the data packet forwarded from a second receiving node after receiving the data packet from the sending node before the determined first time-to-send period expires.

Preferably, the method according to the present invention further comprises determining, when the first receiving node receives the data packet forwarded from a second receiving node after receiving the data packet from the sending node before the determined first time-to-send period expires, the position of neighbor nodes of the first receiving node, determining, whether the neighbor nodes of the first receiving node are located in the communication range of the second receiving node, and/or forwarding the data packet to neighbor nodes of the first receiving node, if the first receiving node is located inside the determined forwarding area and/or at least one of the neighbor nodes of the first receiving node is located outside the communication range of the second receiving node.

Further preferably, a time-to-send-period is determined according to a function of the sender-receiver distance which preferably increases with decreasing sender-receiver distance and which preferably decreases with increasing sender-receiver distance. Alternatively, a time-to-send-period is determined according to a function of the destination-receiver distance which preferably decreases with decreasing destination-receiver distance and which preferably increases with increasing destination-receiver distance

Preferably, the method according to the present invention further comprises receiving, at a second receiving node, the data packet sent from the sending node, determining second receiver position data, wherein the second determined receiver position data preferably indicates the position of the second receiving node, determining a second sender-receiver distance, wherein the second sender-receiver distance preferably indicates a distance between the sending node and the second receiving node based on the sending position data and the second receiver position data, and/or determining a second time-to-send period based on the determined second sender-receiver distance, wherein, if the second sender-receiver distance is smaller than the first sender-receiver distance, the determined second time-to-send period is preferably larger than the determined first time-to-send period such that the first time-to-send period expires sooner than the second time-to-send period, and/or wherein the second receiving node preferably refrains from forwarding the data packet, when the second receiving node receives the forwarded data packet from the first receiving node before the second time-to-send period expires after the time of receiving the data packet from the sending node, preferably even if the second receiving node is located inside the determined forwarding area.

Alternatively, the method according to the present invention preferably further comprises receiving, at a second receiving node, the data packet sent from the sending node, determining second receiver position data, wherein the second determined receiver position data preferably indicates the position of the second receiving node, determining a second destination-receiver distance, wherein the second destination-receiver distance preferably indicates a distance between the second receiving node and the position of the destination or an intermediate destination point, and/or determining a second time-to-send period based on the determined second destination-receiver distance, wherein, if the second destination-receiver distance is larger than the first destination-receiver distance, the determined second time-to-send period is preferably larger than the determined first time-to-send period such that the first time-to-send period expires sooner than the second time-to-send period, and/or wherein the second receiving node preferably refrains from forwarding the data packet, when the second receiving node receives the forwarded data packet from the first receiving node before the second time-to-send period expires after the time of receiving the data packet from the sending node, preferably even if the second receiving node is located inside the determined forwarding area.

Preferably, the method according to the present invention further comprises determining the position of the neighbor nodes of the first receiving node, and/or determining, if the neighbor nodes of the first receiving node are located in the communication range of the sending node based on the position of the sending node and the positions of the neighbor nodes, wherein the first receiving node preferably refrains from forwarding the data packet, when it is determined that all neighbor nodes of the first receiving node are located in the communication range of the sending node. Accordingly, redundant data transmissions can be further avoided in that even a receiving node which is selected as forwarding node refrains from forwarding the data packet because all of its neighbor nodes can be assumed to have received the data packet from the sending node. Further, this has the advantage that data delivery reliability can be further increased as it is avoided that a second receiving node is suppressed by a first receiving node that cannot communicate to nodes that did not receive the data packet yet although the second receiving node could be the preferred forwarding node for further forwarding the data packet.

It is to be noted that this aspect can be also independently employed for area-dissemination so that it is possible to independently provide an advantageous method according to another aspect of the present invention as follows:
A method for disseminating a data packet in a wireless communication network, in particular a mobile ad-hoc network, comprising a plurality of network nodes, the method comprising:
   - receiving, at a first receiving node, a data packet sent from a sending node, wherein the data packet comprises sending position data which indicates a position of the sending node,
   - determining first receiver position data, wherein the first receiver position data indicates a position of the first receiving node,
   - determining a time-to-send period based on the position of the sending node and the position of the position of the first receiving node,
   - determining the position of the neighbor nodes of the first receiving node, and
   - determining, if the neighbor nodes of the first receiving node are located in the communication range of the sending node based on the position of the sending node and the positions of the neighbor nodes, and
   - forwarding the data packet to neighbor nodes of the first receiving node, when the time-to-send period expires after receiving the data packet from the sending node, or
   - refraining from forwarding the data packet, when it is determined that all neighbor nodes of the first receiving node are located in the communication range of the sending node.

The above-described method may be further combined with any of the above-described features and aspects of the present invention.

Referring again to all of the above aspects, preferably, in a case in which it is determined that the first receiving node shall forward the data packet to one or more neighbor nodes of the first receiving node, the method may further comprise determining, at the receiving node, whether a next forwarding node shall be determined based on a receiver-based determination process or based on a sender-based determination process, a next forwarding node being a node which forwards the data packet after receiving the data packet from the first receiving node, wherein according to a receiver-based determination process, the first receiving node preferably sends the data packet to all of its neighbor nodes which, after receiving the data packet from the first receiving node, preferably determine whether to forward the data packet, and according to a sender-based determination process, the first receiving node preferably determines which of its neighbor nodes shall act as a next forwarding node for further forwarding the data packet. This has the advantage that a receiving node which is selected as a forwarding node in order to forward the data packet can additionally decide whether the next forwarding node shall be determined according to a receiver-based method, i.e. the forwarding node would forward the data packet without determining the next forwarding node, or according to a sender-based method, i.e. the forwarding node would determine a next forwarding node before forwarding the data packet to the determined next forwarding node. This has the advantage that a forwarding node can determine the method of the next forwarding node determination on the basis of requirements and network conditions. For example, during a sending process, it can be determined which mode shall be used for the next forwarding node determination based on the network condition or application requirements for the dissemination. For example, if an application requires a low delay for dissemination, a sender-based forwarding mode can be selected since it allows the next forwarding node to quickly forward the data packet. On the other hand, if the first receiving node cannot obtain position information about neighbor nodes or only old position information about neighbor nodes is available, a receiver-based forwarding mode can be selected. Also if the communication quality is bad, the receiver-based forwarding mode is preferably selected since a selected node might fail to receive the packet. In addition, if the first receiving node has knowledge or position information about preferable nodes for relaying such as fixed stations (e.g. stationary nodes), the sender-based forwarding mode is preferably selected and such a preferably node is preferably determined to be the next forwarding node.

It is to be noted that this aspect can be also independently employed for area-dissemination so that it is possible to independently provide an advantageous method according to another aspect of the present invention as follows:
A method for disseminating a data packet to a destination in a wireless communication network, in particular a mobile ad-hoc network, comprising a plurality of network nodes, the method comprising:
   - receiving, at a first receiving node, a data packet sent from a sending node,
   - determining, at the first receiving node, whether a next forwarding node shall be determined based on a receiver-based determination process or based on a sender-based determination process, a next forwarding node being a node which forwards the data packet after receiving the data packet from the first receiving node, and
   - forwarding, from the first receiving node, the data packet to one or more neighbor nodes of the first receiving nodes. Preferably, according to a receiver-based determination process, the first receiving node sends the data packet to all of its neighbor nodes which, after receiving the data packet from the first receiving node, preferably determine whether to forward the data packet, and according to a sender-based determination process, the first receiving node preferably determines which of its neighbor nodes shall act as a next forwarding node for further forwarding the data packet.

Of course, this aspect can also be advantageously utilized at the source node which originally sends the data packet and thereby starts the data dissemination so that it is possible to independently provide an advantageous method according to another aspect of the present invention as follows:
A method for disseminating a data packet to a destination in a wireless communication network, in particular a mobile ad-hoc network, comprising a plurality of network nodes, the method comprising:
   - determining, at a source node or at a receiving node, whether a next forwarding node shall be determined based on a receiver-based determination process or based on a sender-based determination process, a next forwarding node being a node which forwards the data packet after receiving the data packet, and
   - forwarding, from the source node or from the receiving node, the data packet to one or more neighbor nodes. Preferably, according to a receiver-based determination process, the data packet is sent to all neighbor nodes which, after receiving the data packet, preferably determine whether to forward the data packet, and according to a sender-based determination process, it is preferably determined which of the neighbor nodes shall act as a next forwarding node for forwarding the data packet.

The above-described methods may be further combined with any of the above-described features and aspects of the present invention.

Referring again to all of the above aspects, preferably, according to a sender-based determination process, the data packet sent from first receiving node preferably includes identification data identifying one or more of the neighbor nodes of the first receiving node as being determined to be the next forwarding node, wherein the neighbor nodes of the first receiving node, after receiving the data packet from the first receiving node, preferably determine whether to forward the data packet based on the identification data.

Preferably, determining whether a next forwarding node shall be determined based on a receiver-based determination process or based on a sender-based determination process is performed on the basis of at least one of communication network conditions and communication network quality, a node density, data dissemination time constraints, availability of position data indicating positions of neighbor nodes, reliability of position data indicating positions of neighbor nodes, position data indicating stationary nodes, or data indicating one or more neighbor nodes as being stationary nodes. This has the advantage that a forwarding node can determine the method of the next forwarding node determination on the basis of requirements and network conditions. For example, during a sending process, it can be determined which mode shall be used for the next forwarding node determination based on the network condition or application requirements for the dissemination. For example, if an application requires a low delay for dissemination, a sender-based forwarding mode can be selected since it allows the next forwarding node to quickly forward the data packet. On the other hand, if the first receiving node cannot obtain position information about neighbor nodes or only old position information about neighbor nodes is available, a receiver-based forwarding mode can be selected. Also if the communication quality is bad, the receiver-based forwarding mode is preferably selected since a selected node might fail to receive the packet. In addition, if the first receiving node has knowledge or position information about preferable nodes for relaying such as fixed stations (e.g. stationary nodes), the sender-based forwarding mode is preferably selected and such a preferably node is preferably determined to be the next forwarding node.

Preferably, the first receiving node waits until the expiration of a time-to-send period after receiving the data packet from the sending node, which time-to-send period is determined on the basis of at least two of the position of the sending node, the position of the destination, and the position of the first receiving node, preferably on the basis of the position of the sending node and the position of the destination or on the basis of the position of the destination and the position of the first receiving node.

Preferably, the first receiving node refrains from forwarding the data packet to one or more neighbor nodes of the first receiving node, if the data packet is received again at the first receiving node sent from a node other than the sending node before the expiration of the time-to-send period.

Preferably, the method further comprises determining, at the first receiving node, if the destination is reached, and preferably forwarding the data packet to all neighbor nodes of the first receiving node, if it is determined that the destination is reached. This has the advantage that the line-forwarding procedure can be switched to an area-dissemination procedure as soon as the destination is reached by means of line-forwarding dissemination so as to thereafter flood the data packet among a plurality of nodes in the vicinity of the destination, i.e. nodes located within a certain radius of a destination point or destination position or nodes located within a destination area.

Preferably, the destination corresponds to a destination position, wherein it is preferably determined that the destination is reached if the distance between the position of the first receiving node and the position of the destination is smaller (or maybe smaller or equal) than a predetermined threshold distance, or the destination corresponds to a destination area, wherein it is determined that the destination is reached if the first receiving node is located inside the destination area. In case the destination corresponds to a destination area, it can also have an assigned destination point and it may be determined that the destination is reached if the distance between the position of the first receiving node and the position of the destination point is smaller (or maybe smaller or equal) than a predetermined threshold distance.

It is to be noted that the above-described methods and preferred aspects of methods according to the present invention relate to a receiver-based determination of a forwarding node and the first receiving node is not selected by the sending node as a forwarding node. However, the above-described methods and preferred aspects of methods according to the present invention can be further combined with a sender-based forwarding node determination according to which the sending node sends the data packet to all of its neighbor nodes but indicates the sender-based determined forwarding node by node identification information in the data packet which node shall forward the data packet according to the sender-based forwarding node selection performed by the sending node. Then, the method my further comprise the steps of receiving forwarding node identification data from the sending node, determining, at the first sending node, if the received forwarding node identification data indicates the first receiving node, and sending the data packet to neighbor nodes of the first receiving node if the received forwarding node identification data does indicate the first receiving node. In case the first receiving node is not indicated as a forwarding node by the forwarding node identification data, the first receiving node can still determine whether to forward the data packet according to the invention or any of the above-described preferred aspects and maybe forward the data packet anyhow, if it should forward it according to the present invention. However, if the first receiving node receives the data packet again from the designated forwarding node, it could refrain from forwarding the data packet (or it may still forward the data packet in case one or more of its neighbor nodes are located outside the communication range of the designated forwarding node). Then, the advantages of receiver-based and sender-based methods could be advantageously based.

According to the present invention, an apparatus for disseminating a data packet towards a destination in a wireless communication network, in particular a mobile ad-hoc network, comprising a plurality of network nodes, is adapted to be mounted on a first receiving node of the plurality of network nodes and comprises receiving means for receiving, at the first receiving node a data packet sent from a sending node, which data packet shall be forwarded to a destination, receiver position determining means for determining a position of the first receiving node, forwarding area determining means for determining a forwarding area on the basis of a position of the destination, forwarding determining means for determining whether to forward the data packet to one or more neighbor nodes of the first receiving node on the basis of a determination if the first receiving node is located inside the determined forwarding area, and/or sending means for forwarding the data packet to one or more neighbor nodes of the first receiving node.

It can be realized, for example by an apparatus comprising receiving means for receiving, at a first node, a data packet sent from a sending node, wherein the data packet comprises sending position data which indicates a position of the sending node, and/or receiver position determining means for determining first receiver position data, wherein the first receiver position data indicates a position of the first receiving node. The apparatus for disseminating a data packet towards a destination via multi-hop communication in a communication network according to the present invention is characterized by destination position determining means for determining destination position data, wherein the destination position data indicates a position of the destination, forwarding sector determining means for determining a forwarding area based on the sending position data and the destination position data, and/or sending means for forwarding the data packet to neighbor nodes of the first receiving node, if the first receiving node is located inside the determined forwarding area.

The apparatus according to the present invention further comprises neighbor node position determining means for determining the positions of neighbor nodes of the first receiving node and/or neighbor node density determining means for determining the density of neighbor nodes of the first receiving node, wherein the forwarding sector determining means is configured to determine the forwarding area such that the size of the forwarding area is determined based on the determined positions of neighbor nodes of the first receiving node and/or the density of neighbor nodes of the first receiving node, e.g. by determining the opening angle of the forward sector area. Here, the opening angle of the forward sector area may be preferably determined equal or larger than a preferably predetermined minimal opening angle threshold value.

Preferably, the apparatus according to the present invention further comprises sender-receiver distance determining means for determining a first sender-receiver distance, wherein the first sender-receiver distance preferably indicates a distance between the sending node and the first receiving node based on the sending position data and the first receiver position data, and/or time-to-send period determining means for determining a first time-to-send period based on the determined first sender-receiver distance, wherein the sending means is configured to forward the data packet to neighbor nodes of the first receiving node, when the determined first time-to-send period expires after the time of receiving the data packet from the sending node and if the first receiving node is located inside the determined forwarding area and/or the sending means is preferably configured to refrain from forwarding the data packet, if the receiving means of the first receiving node receives the data packet forwarded from a second receiving node after receiving the data packet from the sending node before the determined first time-to-send period expires. Preferably, the apparatus according to the present invention further or alternatively comprises destination-receiver distance determining means for determining a first destination-receiver distance, wherein the first destination-receiver distance preferably indicates a distance between the first receiving node and the position of the destination or an intermediate destination point, and/or time-to-send period determining means for determining a first time-to-send period based on the determined first destination-receiver distance, wherein the sending means is configured to forward the data packet to neighbor nodes of the first receiving node, when the determined first time-to-send period expires after the time of receiving the data packet from the sending node and if the first receiving node is located inside the determined forwarding area and/or the sending means is preferably configured to refrain from forwarding the data packet, if the receiving means of the first receiving node receives the data packet forwarded from a second receiving node after receiving the data packet from the sending node before the determined first time-to-send period expires.

Preferably, the apparatus according to the present invention further comprises neighbor node position determining means for determining, when the first receiving node receives the data packet forwarded from a second receiving node after receiving the data packet from the sending node before the determined first time-to-send period expires, the position of neighbor nodes of the first receiving node, and/or location determining means for determining, whether the neighbor nodes of the first receiving node are located in the communication range of the second receiving node, wherein the sending means is preferably configured to forward the data packet to neighbor nodes of the first receiving node, if the first receiving node is located inside the determined forwarding area and/or at least one of the neighbor nodes of the first receiving node is located outside the communication range of the second receiving node.

Preferably, the apparatus according to the present invention further comprises neighbor node position determining means for determining the position of the neighbor nodes of the first receiving node, and/or location determining means for determining, if the neighbor nodes of the first receiving node are located in the communication range of the sending node based on the position of the sending node and the positions of the neighbor nodes, wherein the sending means of the first receiving node is preferably configured to refrain from forwarding the data packet, when it is determined that all neighbor nodes of the first receiving node are located in the communication range of the sending node.

Preferably, the apparatus according to the present invention further comprises forwarding node selection mode means for determining, at the first receiving node, whether a next forwarding node shall be determined based on a receiver-based determination process or based on a sender-based determination process, a next forwarding node being a node which forwards the data packet after receiving the data packet from the first receiving node.

The apparatus may be configured to perform a method according to any combination of the above-described method aspects. The above-mentioned means of the apparatus may be realized by software, hardware or combinations thereof.

The present invention further provides a computer program product comprising computer program code means being configured to adapt an apparatus for disseminating data in a communication network comprising a plurality of network nodes, in particular an apparatus for disseminating data in a communication network which comprises sending means, receiving means, memory means, and processing means, such that the apparatus is adapted to perform a method for disseminating data in a communication network comprising a plurality of network nodes according to at least one of the above-mentioned aspects. In other words, a computer program product is provided which comprising computer program code means configured to adapt an apparatus for disseminating data in a communication network comprising a plurality of network nodes, in particular an apparatus for disseminating data in a communication network which comprises sending means, receiving means, memory means, and processing means, such that the apparatus realizes an apparatus according to at least one of the above-mentioned aspects.

Such a program may be either stored by the memory means in the apparatus above in advance, or introduced to the memory means from another apparatus via any medium available for the apparatus above. The medium above is, for example, a removable memory medium or a communication medium (i.e. wired, wireless or optical network, or carrier wave and digital signal to realize the network).

In summary, the present invention provides a reliable and robust method and an apparatus for disseminating a data packet towards a destination in a communication network, in particular a mobile ad-hoc network, comprising a plurality of network nodes according to which line forwarding dissemination towards a predetermined destination can be efficiently realized at increased data delivery reliability.

The above-described features of the present invention and of preferred aspects of the present invention can be combined in any way as a whole or in part without departing from the scope of disclosure of the present invention. The above-described features and objects and further potential features, objects and advantages of the present invention will become apparent from the following detailed description of figures and preferred embodiments of the present invention. However, it is to be understood that the scope of the present invention is not limited to the preferred embodiments described below with reference to the schematic drawings but that also combinations of features and/or modifications of features of preferred embodiments that are obvious to the one skilled in the art shall form further embodiments of the present invention.

### Brief Description of the Figures

Fig. 1 schematically illustrates a wireless vehicular mobile ad-hoc network and a general principle of disseminating a data packet via multi-hop communication in a wireless vehicular mobile ad-hoc network comprising a plurality of network nodes.
Fig. 2 schematically illustrates a method for disseminating a data packet according to the prior art (related to receiver-based area-dissemination).
Fig. 3 schematically illustrates a method for disseminating a data packet towards a destination according to a first embodiment of the present invention (related to receiver-based line-forwarding dissemination).
Fig. 4 schematically illustrates a method for disseminating a data packet towards a destination according to a second embodiment of the present invention (related to receiver-based line-forwarding dissemination).
Fig. 5 schematically illustrates a method for disseminating a data packet towards a destination according to a third embodiment of the present invention (related to receiver-based line-forwarding dissemination).
Fig. 6 shows a flow chart of a method for disseminating a data packet towards a destination according to the third embodiment of the present invention (related to receiver-based line-forwarding dissemination).
Fig. 7 schematically illustrates a method for disseminating a data packet towards a destination according to a fourth embodiment of the present invention (related to receiver-based line-forwarding dissemination).
Fig. 8 shows an example of a flow chart of a receiving process of a method for disseminating a data packet according to the seventh embodiment of the present invention (related to a hybrid receiver-based/sender-based line-forwarding and hybrid dissemination/area-dissemination method).
Fig. 9 shows an example of a flow chart of a sending process of a method for disseminating a data packet according to the seventh embodiment of the present invention (related to a hybrid receiver-based/sender-based line-forwarding and hybrid dissemination/area-dissemination method).
Fig. 10 schematically illustrates an example format of a *sending list.*
Fig. 11 schematically illustrates an example format of a *suppression list.*
Fig. 12 schematically illustrates an example format of a data packet.
Fig. 13 shows an example of a flow chart of a forwarding area decision process of a method for disseminating a data packet according to the seventh embodiment of the present invention (related to a hybrid receiver-based/sender-based line-forwarding and hybrid dissemination/area-dissemination method).
Fig. 14 shows an example of a flow chart of a forwarding suppression decision process of a method for disseminating a data packet according to the seventh embodiment of the present invention (related to a hybrid receiver-based/sender-based line-forwarding and hybrid dissemination/area-dissemination method).
Fig. 15 schematically shows an embodiment of an apparatus for disseminating a data packet according to an embodiment of the present invention.
Fig. 16 schematically shows an apparatus for disseminating a data packet towards a destination according to the third embodiment of the present invention (related to receiver-based line-forwarding dissemination).

### Detailed Description of the Figures and of Preferred Embodiments of the Present Invention

In the following, for the description of preferred embodiments according to the present invention, it is assumed that the communication network is a VANET which is formed among a plurality of mobile nodes, e.g. vehicles, and possibly stationary nodes, e.g. road side units. It is assumed that so-called Vehicle to Vehicle communications (V2V; mobile node to mobile node) and Vehicle to Infrastructure communications (V2I; mobile to stationary) are possible. Furthermore, it is assumed that the mobile nodes such as vehicles are equipped with means for determining a current position such as for example a positioning system (e.g. GPS or GALILEO) which is configured to determine the position of each respective vehicle in real time. However, the present invention is not limited to this network configuration and can be applied to networks, in particular wireless networks of a plurality of network nodes, for disseminating a data packet towards a destination via multi-hop communication in the communication network, in particular a mobile ad-hoc network or vehicular mobile ad-hoc network.

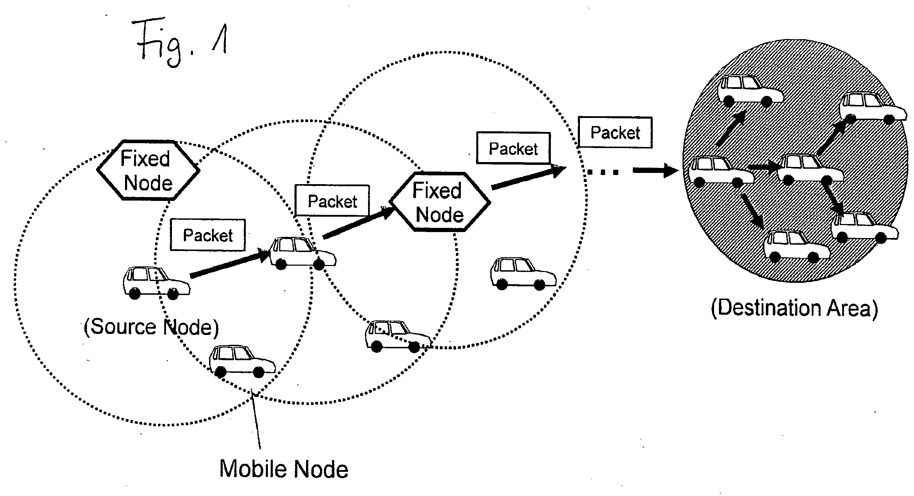

Fig. 1 schematically illustrates an example of wireless vehicular mobile ad-hoc network and a general principle of disseminating a data packet via multi-hop communication in a wireless vehicular mobile ad-hoc network comprising a plurality of network nodes mounted to vehicles. A source node shall send a data packet to a destination area where it is to be disseminated via area-dissemination amongst nodes being located in the destination area. However, the destination area is located outside of the communication range of the source node (communications ranges of nodes being indicated by the dashed circular lines around vehicles in Fig. 1). Therefore, the data packet shall be sent to intermediate nodes to be forwarded to the destination area by the intermediate nodes via a line-forwarding dissemination method. The nodes are mounted to mobile nodes (e.g. vehicles such as automobiles) or embodied by fixed nodes such as stationary nodes.

In other words, Fig. 1 gives a brief overview of the general architecture of target wireless communication systems. Such wireless communication systems can be equipped on mobile nodes which can change their location, such as vehicles, mobile phones, and the like, and also on the fixed node, i.e. stationary nodes such as traffic lights/signs, wireless access points and so on. In this system, mobile nodes and fixed nodes can communicate with each other within their limited communication range (*Rmax*). Preferably, such a wireless network system is suitable for vehicular communication services. A vehicle which is equipped with an apparatus for wireless communication sends/receives data messages to/from other mobile nodes or stationary nodes which are deployed near the road, for the purpose of services to enhance traffic safety, traffic efficiency and comfort and/or entertainment for drivers and passengers. In this system, a mobile node or a stationary node delivers a data packet to a specific area or node, which can be located outside of the radio range of the node. If needed, intermediate nodes forward the data packet to the destination (i.e. a line-forwarding part) and, then, disseminate it inside the specified destination area (i.e. an area-dissemination part). If a node is specified as the destination, only line-forwarding part may be applied. In the line-forwarding part, the data packet is forwarded such that at least one of the distributed data packets can reach the destination area or node with less delay. On the other hand, in the area-dissemination part, the packet is forwarded so that nodes located in the specified destination area can receive the data packet.

### Background relating to receiver-based area-dissemination

Fig. 2 schematically illustrates a method for disseminating a data packet via multi-hop communication in a wireless vehicular mobile ad-hoc network comprising a plurality of network nodes according to the prior art (according to Mariyasagayam et al.) related to area-dissemination. The description is given in order to define the terms as used in the present description.

A plurality of nodes S, F1, F2, F3, B1, B2, B3, B4, B5, B6, B7, R1, R2, and R3 of a wireless communication network are shown in Fig. 2. The node S sends or transmits the data packet which is to be transmitted. The node S is referred to as a sending node S in the following as it sends the data packet. However, it is to be understood that this is only for explanatory reasons and does not necessarily indicate that node S is the original sender of the data packet (the original sender is commonly referred to as a source or source node). Specifically, node S can also have received the data packet from another node (i.e. a previous forwarding node) and forwards the data packet again after receiving the data packet so that it acts already as a forwarding node.

The communication range of the sending node S is indicated in Fig. 2 by the dashed circle surrounding the sending node having the sending node S in the center. The communication range of the sending node is defined by the maximal communication range Rmax of the sending node S, wherein the sending node S can communicate to nodes that are within a distance smaller or equal to Rmax. All nodes that are located in the communication range of the sending node S are referred to as neighbor nodes of the sending node S. As shown in Fig. 2, the sending node S has neighbor nodes F1, F2, F3, B1, B2, B3, B4, B5, B6, and B7 which are all located inside of the communication range of the sending node S. The communication range Rmax can change depending on the radio transmission power. Accordingly, the communication range Rmax is preferably calculated adaptively.

When the sending node S sends the data packet, it is received by the neighbor nodes of the sending node S, i.e. nodes F1, F2, F3, B1, B2, B3, B4, B5, B6, and B7. Among these nodes, one or more forwarding nodes are selected for forwarding the data packet. However, the present invention relates to a receiver-based dissemination method according to which a node that receives a data packet decides for itself or is at least involved in deciding, whether it shall act as a forwarding node or not, i.e. whether it shall forward the data packet or refrain from forwarding the data packet. This means that a forwarding node is selected on the receiver side and has to be distinguished from the very different sender-based approaches according to which a sending node itself selects the next forwarding node in that it decides the next forwarding node and transmits the data packet to the selected forwarding node so that this forwarding node forwards the data packet or transmits the data packet indicating in the sent data identification data indentifying the selected forwarding node, which can then forward the data packet while other nodes receiving the data packet refrain from forwarding the data packet due to the mismatch of their identification data and the identification data indicated in the received data.

Referring again to Fig. 2, after receiving the data packet from the sending node S, for each of the nodes F1, F2, F3, B1, B2, B3, B4, B5, B6, and B7, there is determined a respective time-to-send period based on the distance between the respective node and the sending node S. Here, a larger distance to the sending node leads to the determination of a smaller time-to-send period and a smaller distance to the sending node leads to the determination of a larger time-to-send period (e.g. as described in EP 1 788 749 A1).

After receiving the data packet from the sending node S, each node waits for the its individual determined time-to-send period before forwarding the data packet depending on its distance to the sending node S. Accordingly, nodes that are located at a larger distance to the sending node S forward the data packet before it is forwarded by nodes located closed to the sending node. According to the method as described in EP 1788 749 A1, when a receiving node receives the data packet from another receiving node that forwards the data packet, i.e. the data packet is received again after receiving the data packet from the sending node S, it refrains from forwarding the data packet. This is referred to as a suppression method, where only the neighbor node of the sending node that is located at the largest distance forwards the data packet and the other neighbor nodes refrain from forwarding the data packet as it has been already forwarded, i.e. forwarding by the other neighbor nodes is suppressed.

As shown in Fig. 2, a predetermined opening angle α for a so-called backfire sector or suppression area is defined. For example, a receiving node F1 receives the data packet from the sending node S and determines a time-to-send period based on its distance to the sending node S. After the time-to-send period expires, the node F1 forwards the data packet to its neighbor nodes (F2, B1, B2, B3, B4, B5, S and R1). However, the nodes F2, B1, B2, B3, B4, and B5 receive the data packet forwarded by F1 a second time after already having received the data packet from the sending node S. However, as they are located closer to the sending node S than node F1, their time-to-send period has not expired yet. According to EP 1 788 749 A1, nodes F2, B1, B2, B3, B4, and B5 would now refrain from forwarding the data packet, i.e. F1 would suppress nodes F2, B1, B2, B3, B4, and B5. However, according to the dissemination method of Fig. 2, a suppression area BS1 is defined based on the location of the forwarding node F1 as shown in Fig. 2 based on the defined opening angle α. Namely, any node which is located closer to the sending node S than the node F1 and which is, at the same time, located in a direction from the sending node S that has an angle smaller or equal to α/2 to the direction of node F1 form the sending node S is located within the suppression area BS1 of node F1. In Fig. 2, nodes B1 and B2 are located inside the suppression area of node F1 and are, thus, suppressed by node F1, when receiving the data packet forwarded from node F1, and refrain from forwarding the data packet themselves.

However, also nodes F2, B3, B4, and B5 receive the data packet from node F1 but are located outside the suppression area BS1 of node F1. Hence, these nodes F2, B3, B4, and B5 do not refrain from forwarding the data packet but just wait longer according to their determined time-to-send periods and after the time-to-send period of node F2 expires, node F2 forwards the data packet to its neighbor nodes, especially R2, B3, B4, and B5. According to the location of forwarding node F2, a suppression area BS2 is defined by the location of node F2 and the suppression area opening angle α. As nodes B3, B4, and B5 are located in this suppression area BS2 of node F2, the nodes B3, B4, and B5 refrain from forwarding the data packet because they receive the data packet from node F2, i.e. node F2 suppresses nodes B3, B4, and B5. Accordingly, also a node F3 forwards the data packet and suppresses nodes B6 and B7 which are located in the suppression area defined by the location of node F3. That means that only nodes F1, F2, and F3 are selected as forwarding nodes to forward the data packet e.g. to nodes R1, R2, and R3, respectively. However, nodes B1 to B7 refrain from forwarding the data packet according to this dissemination method as they are suppressed by nodes F1, F2, and F3. Then, the procedure repeats according to the same method, when it is according to the same algorithm decided whether nodes R1, R2, and R3 shall forward the data packet or refrain from forwarding the data packet (nodes F1, F2, F3 can then be regarded as sending node and nodes R1, R2 and R3 as receiving nodes).

However, the above-mentioned method does not relate to line forwarding, where a data packet shall be forwarded to a particular destination such as a destination point or destination area.

### First embodiment (receiver-based line-forwarding dissemination)

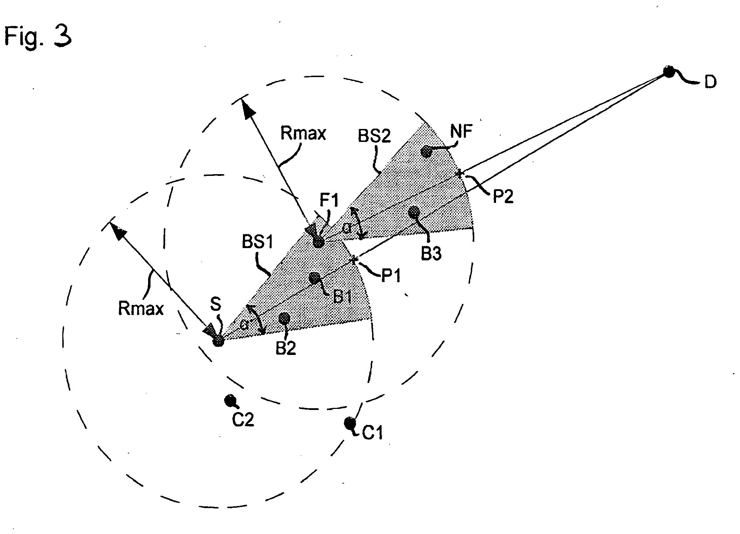

Fig. 3 schematically illustrates a method for disseminating a data packet towards a destination in a communication network, in particular preferably via multi-hop communication in a wireless vehicular mobile ad-hoc network, comprising a plurality of network nodes according to a first embodiment of the present invention. A data packet shall be disseminated via multi-hop communications to a destination D, which may correspond to a specific target position or destination point, a specific target node located at a destination position or a target area at the destination position, e.g. to send a data packet to target nodes located inside the target area.

As shown in Fig. 3, a sending node S sends/forwards a data packet to its neighbor nodes, i.e. the nodes that are located inside the communication range of the sending node S defined by the maximal communication distance Rmax. Accordingly, nodes F1, C1, C2, B1, and B2 receive the data packet from the sending node S. As in the above-method, a forwarding area BS1 is determined (calculated), wherein in contradistinction thereto, the forwarding area BS 1 is defined by a point P1 instead of a position of a receiving node. Point P1 (or the position of point P1) is calculated based on the position of the destination D to which the data packet shall be forwarded and the position of the sending node S.

Namely, according to this first embodiment, the forwarding area BS is directed towards the position of the destination D in that the direction of the forwarding area BS 1 from the sending node S is defined by point P1, which is calculated as the geometrical intersection point of the border of the communication range of the sending node S and the straight line between the location of the sending node S and the position of the destination D as shown in Fig. 3. Then, node F1 is selected as forwarding node as it is the node inside the forwarding area BS 1 that has the largest distance to the sending node S (compared to the nodes B1 and B2). Accordingly, node F1 forwards the data packet which is then received by nodes S, B1, B2, B3, and NF as these nodes are the neighbor nodes of node F1, i.e. the nodes located in the communication range of node F1.

Also nodes B1 and B2 are located in the forwarding area BS 1 and receive the data packet from node F1 after already having received the data packet from sending node S before their respective time-to-send period has expired. Accordingly, these nodes B1 and B2 refrain from forwarding the data packet (they are suppressed by node F1). However, as can be seen in Fig. 3, nodes C1 and C2 are outside the communication range of the node F1. Still, contrary to the method according to the prior art (Mariyasagayam et al.), these nodes C1 and C2 refrain from forwarding the data packet as they are not located in the determined forwarding area BS1 which is directed towards the position of the destination D. Hence, redundant forwarding of data packets can be reduced in comparison to the prior art.

Furthermore, when node F1 forwards the data packet, it acts as a sending node and nodes NF and B3 receive the data packet (for the first time) from the forwarding node/sending node F1. According to the same algorithm, a new point P2 is determined based on the position of the forwarding node/sending node F1 and the position of the destination D as shown in Fig. 3 for determining a new forwarding area BS2 based on the position of the point P2, i.e. based on the direction towards the destination D. Both nodes NF and B3 are located inside the forwarding area BS2 but node NF forwards the data packet before node B3 and is suppressed by node NF according to the above method, i.e. in that it receives the data packet from node NF after having already received the data packet from the node F1.

It is to be noted that the terms "sending node", "forwarding node" or "receiving node" used throughout this description are intended to be relative terms and one and the same node can act as a sending node, a forwarding node or a receiving node (even simultaneously as these terms only refer to particular points of view). For example, node F1 is a receiving node F1 as it receives the data packet from node S, node F1 is a forwarding node F1, as it is selected as a forwarding node F1 which forwards the data packet after having received the data packet from the node S and node F1 is a sending node F1 as it sends (forwards) the data packet to node NF which receives the data packet from the sending node F1 (not having received the data packet before from another node).

Summarizing, according to this first embodiment relating to receiver-based line-forwarding, there is calculated a point (position) which corresponds to the intersection between the border of the communication range of a sending node and the straight line from the position of the sending node (sending node position) to the position of the destination (destination position). This calculated point (position) is then used to determine the forwarding area. Within this forwarding area, all nodes located therein enter into competition to become the next forwarder. The node located in the forwarding area which is located at the largest distance from the sending node position will forward first (e.g. as its time-to-send period expired first). Thus, this receiving node is selected as the forwarding node. By computing/calculating/determining the forwarding area from the above-mentioned intersection point between the border of the communication range of the sending node and the straight line from the sending node to the destination position) has the effect that the node which is actually selected as next forwarding node (or act as next forwarding node) is always located in direction toward the final destination so that the direction of data dissemination according to this aspect is automatically performed toward the destination according to the requirements of efficient and robust line forwarding dissemination.

In Fig. 3, the opening angle of the forwarding area BS1 (forwarding area BS1) and the opening angle of the forwarding area BS2 are equal and determined according to a predetermined value α. However, the first embodiment of the present invention is exemplarily realized in that the opening angle of the respective forwarding area is determined based on neighbor nodes knowledge.

Accordingly, in such embodiment, the forwarding area BS1 is determined by node F1 in that an opening angle of the forwarding area BS1 is determined based on the knowledge about the neighbor nodes of node F1, e.g. based on a density of neighbor nodes of node F1, a distribution of neighbor nodes of node F1 (e.g. based on a directional density distribution), and/or the position of neighbor nodes of node F1. However, the forwarding area BS2 is determined by node NF in that an opening angle of the forwarding area BS2 is determined based on the knowledge about the neighbor nodes of node NF, e.g. based on a density of neighbor nodes of node NF, a distribution of neighbor nodes of node NF (e.g. based on a directional density distribution), and/or the position of neighbor nodes of node NF.

This means that the opening angles of the forwarding areas BS1 and BS2 may be determined to be different according to the embodiment. For example, a higher density of neighbor nodes around node F1 compared to the density of neighbor nodes around node S leads to the determination of a larger opening angle of forwarding area BS1 compared to the opening angle of forwarding area BS2. Accordingly, the size of the determined forwarding area depends on the location, distribution, number, and/or location of neighbor nodes the size of a forwarding area can be increased or decreased depending on the density of neighbor nodes e.g. in case of high number and/or high density of neighbor nodes, the size is preferably decreased so that a higher number of nodes is suppressed and the forwarding area can be better focused towards the destination (e.g. by decreasing the forwarding area angle in case of a high number and/or high density of neighbor nodes). Also, in case of a low number and/or low density of neighbor nodes, the size is preferably increased so that a lower number of nodes is suppressed (e.g. by increasing the forwarding area angle in case of a low number and/or low density of neighbor nodes).

However, data delivery reliability can be further increased by determining a larger opening angle in case of low number and/or low density of neighbor nodes. The reliability can be even further increased by setting a minimal threshold value for the determined opening angle so that the opening angle is equal or larger than the minimal opening angle threshold value. It is to be noted that not only nodes NF and F1 might determine the forwarding areas BS1 and BS2 with different opening angles but that also the nodes B1 and B2 in Fig. 3 may determine forwarding areas having different opening angles (but of course the same direction through point P1) according to the embodiment. Such a dynamical opening angle determination based on the knowledge about neighbor nodes of the respective receiving nodes may of course also be combined with any of the below-described embodiments.

In this embodiment, the opening angle of the respective forwarding area is determined based on neighbor nodes knowledge in case of line-forwarding, however, it can also be independently and advantageously applied to area-dissemination methods such as the method as described with reference to Fig. 2 above.

### Modification of the first embodiment (receiver-based line-forwarding dissemination)

In the first embodiment, a time-to-send period is determined based on the position of the sending node S and the position of the receiving node, e.g. the position of the node F1 which receives the data packet from the sending node S (i.e. the time-to-send period determination of the method according to the first embodiment as described with reference to Fig. 3 is similar to the time-to-send determination as also described with reference to Fig. 2). However, according to this modified embodiment, a time-to-send period is determined based on the position of the receiving node and the position of the destination D (or a position of an intermediate destination point such as for example a reference point indication the position of an intersection or another area of interest or point of interest).

In the time-to-send period determination according to this modified embodiment, the time-to-send period is determined based on the distance between a reference point (e.g. the position of the destination or an intermediate reference point) and the receiving node (this node), so that the receiving node being located closer to the reference point can forward the data packet more quickly. For example, a linear function "[Time-to-send]=a * d" can be used, where *a* is a specific constant and *d* is the distance between the reference point and the receiving node.

It is also to be noted that the determination of a time-to-send according to this modification can be independently applied to all line-forwarding data dissemination methods utilizing a forwarding area regardless of shape and geometry of the forwarding area as long as there is known a position of a destination or a reference point such as e.g. an intermediate destination point.

### Second embodiment (receiver-based line-forwarding dissemination)

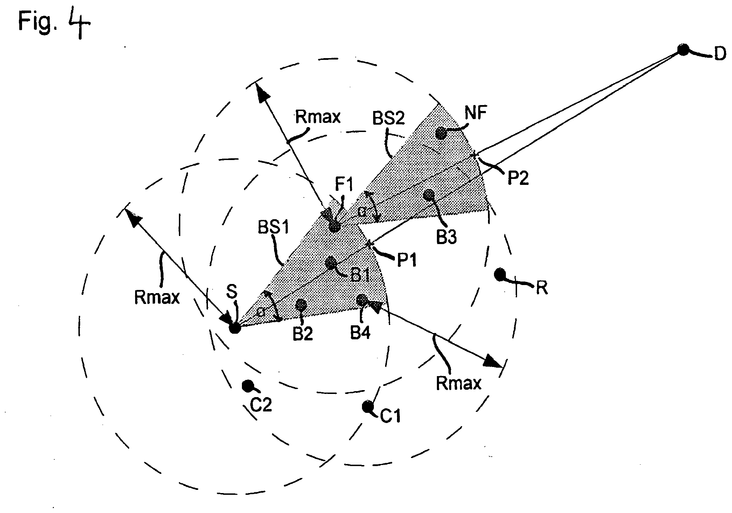

Fig. 4 schematically illustrates a method for disseminating a data packet towards a destination in a communication network, in particular preferably via multi-hop communication in a wireless vehicular mobile ad-hoc network, comprising a plurality of network nodes according to a second embodiment of the present invention.

The following description of the second embodiment only relates to differences to the above-described method for disseminating a data packet towards a destination according to a first embodiment of the present invention. Other features and aspects are the same as in the first embodiment (or the modification of the first embodiment) and the same reference numerals are used for similar objects.

In the scenario of Fig. 4, a further node R is present. However, node R is located outside the communication range of node F1 and, hence, node R does not receive the data packet forwarded from node F1 as explained above in connection with Fig. 3. However, node R may also be a good candidate for efficiently and reliably forwarding the data packet towards the destination D.

According to the second embodiment of the present invention, nodes located inside a determined forwarding area check, whether all of their neighbor nodes have received the data packet from the selected forwarding node or not before refraining to forward the data packet. In the example of Fig. 4, receiving node B4 receives the data packet from receiving node/forwarding node F1 after having already received the data packet from sending node S. Accordingly, node B4 would be suppressed according to the above first embodiment. However, in this embodiment, node B4 checks, after receiving the data packet from node F1, whether its neighbor nodes are also located in the communication range of node F1, i.e. the node that acts as a forwarding node from the view point of node B4. However, for example, node R is located outside the communication range of node F1 and could not have received the data packet from node F1. Accordingly, B4 does not refrain from forwarding the data packet but forwards the data packet to its neighbor nodes as not all neighbor nodes have received the data packet from forwarding node F1 although node B4 is located inside the forwarding area BS1.

### Third embodiment (receiver-based line-forwarding dissemination)

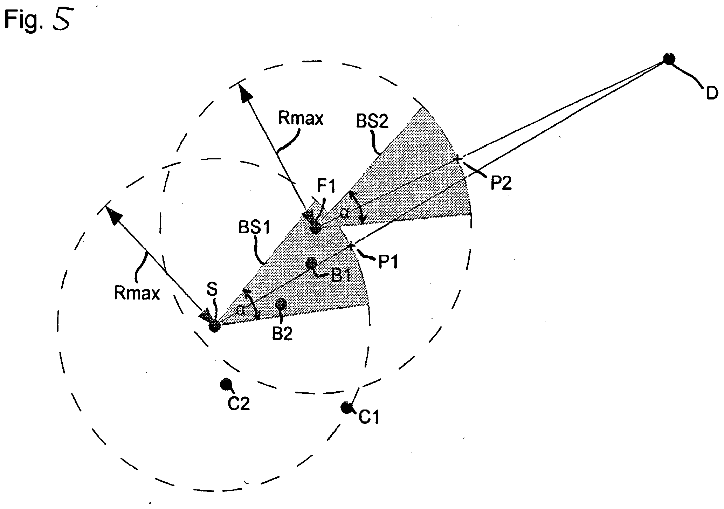

Fig. 5 schematically illustrates a method for disseminating a data packet towards a destination in a communication network, in particular preferably via multi-hop communication in a wireless vehicular mobile ad-hoc network, comprising a plurality of network nodes according to a third embodiment of the present invention. Here, the method according to the illustration of Fig. 5 is applied to line-forwarding so as to avoid that a forwarding node that cannot reach any new nodes by forwarding the data packet does not suppress other nodes from forwarding the data packet (which nodes could have a better chance to forward the data packet to or towards the destination). However, the concept of Fig. 5 can also be independently applied to area-dissemination being even more advantageous since redundant transmission can be avoided in the area-dissemination.

The following description of the third embodiment only relates to differences to the above-described method for disseminating a data packet towards a destination according to a first embodiment or a second embodiment of the present invention. Other features and aspects are the same as in the first embodiment (or the modification of the first embodiment) and/or as in the second embodiment and the same reference numerals are used for similar objects.

In the scenario of Fig. 5, a forwarding node, i.e. a node that has been selected as forwarding node additionally checks, whether its neighbor nodes are located in the communication range of the sending node. In the example of Fig. 5, the node F1 is selected as forwarding node according to the first or second embodiment above, however, before forwarding the data packet received from the sending node S, node F1 checks, whether its neighbor nodes are located in the communication range of the sending node S. However, as the neighbor nodes of node F1, i.e. nodes B1, B2, and S are all located inside the communication range, it can be assumed that they already have received the data packet (either from node S as would be the case for B1 and B2, or another node as would be the case for node S). Hence, according to this embodiment, node F1 refrains from forwarding the data packet although it has been selected as forwarding node for forwarding the data packet so as to reduce unnecessary data transmissions within the network.

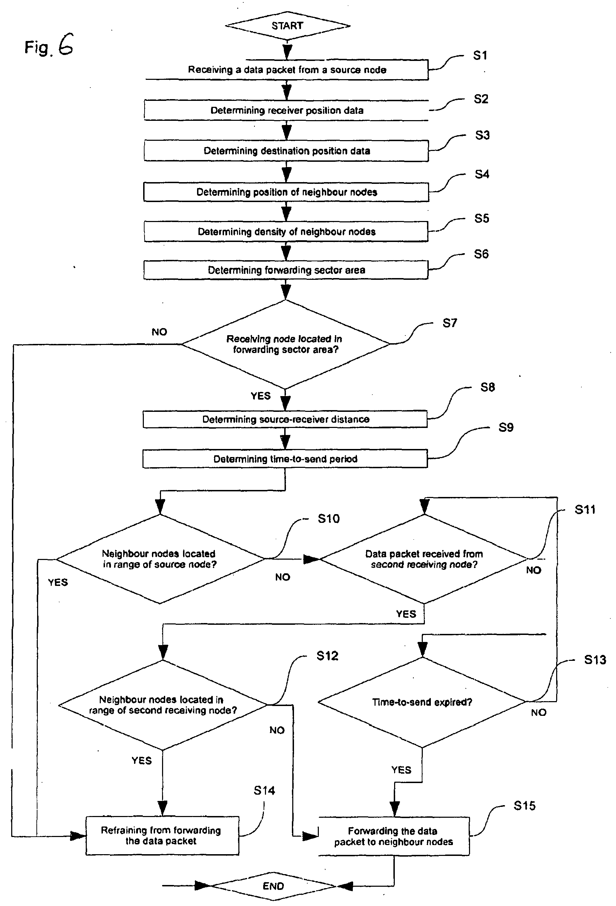

Fig. 6 shows a flow chart of a method for disseminating a data packet towards a destination according to the third embodiment of the present invention (Fig. 6 may comprise steps that also relate to steps that are also performed in the first and second embodiments depending on the features of the first and second embodiments).

As shown in Fig. 6, the method according to the third embodiment comprises the steps of receiving (S1), at a receiving node, a data packet sent from a sending node S, wherein the data packet comprises sending position data which indicates a position of the sending node S, determining (S2) receiver position data, wherein the receiver position data indicates a position of the receiving node, determining (S3) destination position data, wherein the destination position data indicates a position of the destination, determining (S4) the positions of neighbor nodes of the receiving node, determining (S5) the density of neighbor nodes of the receiving node, and determining (S6) a forwarding area based on the sending position data and the destination position data.

Here, the forwarding area is determined such that the opening angle of the forwarding sector angle is determined based on the determined positions of neighbor nodes of the first receiving node and the density of neighbor nodes of the first receiving node. Especially, the opening angle is determined based on a function that increases with increasing density and decreases with decreasing density so that the opening angle is determined larger when the density of neighbor nodes is higher and the opening angle is determined smaller when the density of neighbor nodes is lower. Accordingly, the so-called forwarding area angle α is selected depending on the density and/or location of the nodes within the neighborhood of the receiving node.

For this procedure, the invention makes use of the availability of the knowledge about the neighbor nodes. Here, each node keeps track of its one-hop neighbors e.g. from the beaconing information sent by the nodes. Thus, nodes can be configured to compute an instantaneous neighbor node density within their radio range (communication range). For example, the opening angle can be made proportional to the density of the nodes around the receiving node. The higher the density of neighbor nodes is, the larger is the opening angle value set by a receiving node for the forwarding area, i.e. the forwarding area. This leads to higher number of nodes being suppressed in a high-density scenario so that bandwidth can be saved and bandwidth consumption can be reduced. On the other hand in a low-density scenario, the decrease of the opening angle has the advantage that the connectivity can be increased and also the reliability can be increased because a lesser number of nodes are suppressed because of the smaller forwarding area, i.e. the smaller forwarding area.

After performing the above-mentioned steps S1 to S6 (not necessarily in the above-mentioned order), it is determined (S7), if the receiving node is located inside the determined forwarding area. If the receiving node is not located inside the determined forwarding sector, the receiving node refrains (S14) from forwarding the data packet to neighbor nodes according to this embodiment.

However, the present invention is not limited to this feature and the method according to another embodiment of the present invention may also directly continue with step S12, which will be described below, if the data packet is received from a second receiving node although it is determined that the (first) receiving node is not located inside the determined forwarding sector.

On the other hand, if it is determined that the receiving node is located in the forwarding sector data in step S7, the method continues with the steps determining (S8) a sender-receiver distance, wherein the sender-receiver distance indicates a distance between the sending node and the receiving node based on the sending position data and the receiver position data, and determining (S9) a time-to-send period based on the determined sender-receiver distance. Especially, the time-to-send period is determined based on a function of the distance to the sending, which function increases with decreasing distance to the sending node and decreases with increasing distance to the sending node. Accordingly, for a node that is located farther away from the sending node than another node, the time-to-send period is determined smaller that the corresponding time-to-send period of the other node.

Alternatively, as a first modification of the third embodiment, the method can also continue with a modified step S8 of determining a destination-receiver distance, wherein the destination-receiver distance indicates a distance between the position of the receiving node and the position of the destination (or an intermediate destination point such as a reference point indicating an area of interest such as for example the position of an intersection of a traffic network). Then, also the step S9 is modified to a step of determining a time-to-send period based on the determined destination-receiver distance. Especially, the time-to-send period is then preferably determined based on a function of the distance to the destination (or the reference point), which function increases with increasing distance to the destination (or reference point) and decreases with decreasing distance to the destination (or reference point). Accordingly, for a node that is located farther away from the destination (or reference point) than another node, the time-to-send period is determined larger that the corresponding time-to-send period of the other node.

Then, it is determined (S10), if the neighbor nodes of the receiving node are located in the communication range of the sending node based on the position of the sending node and the determined positions of the neighbor nodes. If all neighbor nodes of the receiving node are located in the communication range of the sending node, the receiving node refrains (S14) from forwarding the data packet because it can be assumed that all neighbor nodes have already received the data packet from the initial sending node. However, when it is determined in step S10 that not all neighbor nodes of the receiving node are located in the communication range of the sending node, it is checked (S11), whether the data packet has been (again) received from a second receiving node (which also received the data packet from the sending node and already forwarded the data packet as its time-to-send period already expired before the time-to-send period determined for the receiving node expired after receiving the data packet from the initial sending node at the substantially same time).

If the data packet has been (again) received from a second receiving node, it is determined (S12), whether the neighbor nodes of the receiving node are located in the communication range of the second receiving node. When it is determined that all neighbor nodes of the receiving node are located in the communication range of the second receiving node, the receiving node refrains (S14) from forwarding the data packet itself, i.e. it is "suppressed" by the second receiving node, as it can be assumed that all neighbor nodes of the receiving node have also received the data packet forwarded from the second receiving node, However, when it is determined that at least one neighbor node of the receiving node is not located in the communication range of the second receiving node so that it is not in one-hop range of the second receiving node and cannot have received the data packet from the second receiving node, the receiving node forwards (S15) the data packet to this neighbor node (possibly not until checking that this neighbor node is also not in the communication range of the initial sending node and/or also possibly not before the time-to-send period expires as it could occur that the data packet is once again received from a third receiving node before expiration of the time-to-send period).

On the other hand, when it is determined in step S11 that the data packet has not yet been (again) received from a second receiving node, it is checked (S13), whether the determined time-to-send period has expired after receiving the data packet from the sending node, and if the time-to-send period is expired, the receiving node forwards the data packet to its neighbor nodes. More precisely, the receiving node forwards the data packet as soon as the time-to-send period expires (the time-to-send period being the time period between receiving the data packet from the sending node and forwarding the data packet). However, when the time-to-send period is not yet expired, the receiving node waits until either the data packet is received from a second receiving node or the time-to-send period expires (i.e. a loop between steps S11 and S13).

By the above method, it is possible to reduce the bandwidth consumption within the network and to reducing the network overhead. Reducing the bandwidth consumption and the network overhead can be especially attained by the following two aspects (which may be utilized combined or also separately, even without the aspect of a forwarding area or forwarding area being directed towards a destination):
The first aspect relates to the features according to which potential forwarding nodes, i.e. nodes which receive a data packet from a network node (sending node), determine, whether there is still the requirement that they forward the data packet or not before forwarding the data packet. This can be realized for example in that a receiving node which is selected as forwarding node of the data packet received from the sending node, determines the position of all of its neighbor nodes so as to determine whether these neighbor nodes are located within the communication range of the sending node (an/or in the communication range of any other potential forwarding node). In case all neighbor nodes of the receiving node are determined to be located inside of the communication range of the sending node it can be assumed on the side of the receiving node that all of its neighbor nodes have already received the data packet from the sending node. Thus there is no need that the receiving node actually forwards the data packet although it is selected as a forwarding node according to any possible protocol or dissemination method.
The second aspect can be applied to dissemination methods that utilize a forwarding area or forwarding sector not necessarily directed towards a destination) by dynamically adapting the forwarding area angle as a function of the density and/or the location of the nodes within the vicinity of a receiving node or a sending node, i.e. neighbor nodes of a receiving node or neighbor nodes of a sending node. For such a procedure, the availability of the knowledge about position, velocity and/or speed of neighbor nodes can be used to reduce the bandwidth consumption within the network. Accordingly, each node keeps track of its one-hop neighbor nodes from possible beaconing information sent by them in periodic transmissions of beacon signals comprising data indicating the position, velocity and/or speed of nodes. Then, node of the network can compute an instantaneous density within its radio range. This value of the density can then be used to compute or determine instantaneously a forwarding area angle for the sector, e.g. an opening angle of a forwarding area. The opening angle can be made proportional to the density of the neighbor nodes around a receiving node or a sending node. The higher the density is determined, the larger is the opening angle value set by a node for the forwarding area or forward sector area. This will leads to higher number of nodes being suppressed in a high-density scenario so that bandwidth can be saved. On the other hand in a low-density scenario, the determination of a smaller opening angle can be used to increase connectivity and also the reliability since a lesser number of nodes is suppressed (caused to refrain from forwarding a received data packet) because of the smaller forwarding area due to the smaller opening angle.

It is to be noted that the flow chart of Fig. 6 includes plural preferred features of the present invention which include optional features or optional steps which do not correspond to essential features of the present invention. Accordingly, further embodiments of the present invention can be obtained by modifying the method as shown in Fig. 6 by omitting one or more steps and/or changing the order of two or more steps.

### Fourth embodiment (receiver-based line-forwarding dissemination)

In the above-described embodiments of the present invention, the forwarding area was determined based on the position of the destination and based on the position of the sending node. Hence, it was either possible that the sending node determines the forwarding area since it knows its position (i.e. the position of the sending node) and the position of the destination. Then, the sending node can inform its neighbor nodes about the determined forwarding area by sending forwarding area indicating data. Also, it is efficiently possible that the receiving nodes determine the forwarding area based on the position of the sending node and the position of the destination, preferably by receiving data from the sending node indicating both, the position of the destinations and the position of the sending node (which data may be included in the data packet or be sent separately).

The following description of the fourth embodiment only relates to differences to the above-described embodiments of methods for disseminating a data packet in a communication network. Other features and aspects can be the same as in the above-described embodiments and their modifications.

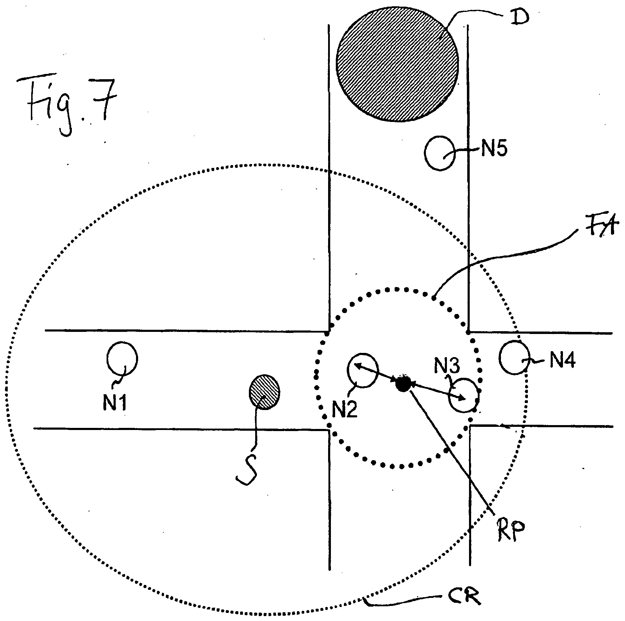

When determining a forwarding area at the sending node, it is also possible to perform a method of data dissemination according to this fourth embodiment as schematically illustrated in Fig. 7.

In Fig. 7, nodes N1, N2, N3, and N4 are neighbor nodes of a sending node S, i.e. nodes N1, N2, N3, and N4 are located inside the communication range CR of the sending node S indicated by the dashed line in Fig. 7. The destination area D is located outside of the communication range CR of the sending node S.

However, according to this fourth embodiment, traffic network topology information such as for example navigational data about the traffic network of Fig. 7 is available to the sending node. Instead of determining the forwarding area based on its position and the position of the destination and instead of sending the data packet to one or more of the neighbor nodes N1 to N4, the sending node determines a forwarding area based on the position of the destination and the available traffic network topology information.

If the sending node S in Fig. 7 for example knows a preferable place or area for relaying the data, it can specify such an area as a forwarding area in the data packet. For example, as shown in Fig. 7, the sending node S is located on the left of an intersection and shall deliver the data packet to the destination area D, which is located on the top of the intersection. In this scenario, with high probability, a node which is located at the intersection can forward the packet efficiently towards the destination. If the sending node S knows road information, according to a sender-based method, the sending node S could select a node which is located at the intersection as the next forwarding node. But if the sending node S directly selects the next forwarding node based on position information of its neighbor nodes N1, N2, N3 and N4 (i.e. sender-based forwarding mode), the selected forwarding node may be no longer located at the intersection due to its mobility, and may fail to receive the packet. Therefore, instead of determining the forwarding area at the receiving nodes, the sending node S itself determines the forwarding area. In this scenario according to Fig. 7, the area of the intersection is chosen as the forwarding area. When receiving the data packet, receiving nodes which are located inside the forwarding area can determine the next forwarding node(s) in the same way as in one of the above-described embodiments. For example, the sender node S can specify, in the data packet, a reference point RP to be used for determining a time-to-send period, together with the forwarding area. Then a receiving node can calculate the time-to-send period based on the distance to the reference point.

It is to be noted that such a forwarding mechanism can be also applied to a sender-based forwarding method. In addition to the node ID, the sending node S can then specify the reference point and the forwarding area. When there is no specific preferable point to relay, the sending node S can just specify the position information of the selected node as the reference point, and also specify the forwarding area, for example, by setting a distance threshold from the reference point. By doing so, even if the selected node would fail to forward the data packet, other nodes can forward the data packet in the specified area instead.

By specifying the next forwarder area, the sending node S not only can specify a geographical route for forwarding the data packet, like in a sender-based forwarding method, but also can keep high reliability of forwarding the data packet, like in a receiver-based forwarding mode.

For example, in Fig. 7, the sending node S determines a forwarding area FA as indicated by the dotted line in Fig. 7 covering a road intersection of the traffic network which is located closer to the position of the destination D than the position of the sending node S. The forwarding area can have any shape but preferably, a circular area is used which can be indicated to the forwarding nodes by sending forwarding area data indicating the forwarding area FA by a center (e.g. reference point RP) and the radius of the forwarding area.

In this fourth embodiment, the receiver-based forwarding node determination is preferably performed on the basis of the calculation of a respective time-to-send period, which time-to-send period calculation is performed on the basis of a destination-receiver distance as described above.

### Fifth embodiment (combining sender-received and receiver-based line-forwarding dissemination)

The following description of the fifth embodiment only relates to differences to the above-described embodiments of methods for disseminating a data packet in a communication network. Other features and aspects can be the same as in the above-described embodiments and their modifications.

In a case in which it is determined that the first receiving node shall forward the data packet to one or more neighbor nodes of the first receiving node, the method according to the fifth embodiment further comprises determining, at the first receiving node, whether a next forwarding node shall be determined based on a receiver-based determination process or based on a sender-based determination process, a next forwarding node being a node which forwards the data packet after receiving the data packet from the first receiving node, wherein according to a receiver-based determination process, the first receiving node sends the data packet to all of its neighbor nodes which, after receiving the data packet from the first receiving node, determine whether to forward the data packet, and according to a sender-based determination process, the first receiving node determines which of its neighbor nodes shall act as a next forwarding node for further forwarding the data packet.

For example, during a sending process, it can be determined which mode shall be used for the next forwarding node determination based on the network condition or application requirements for the dissemination. For example, if an application requires a low delay for dissemination, a sender-based forwarding mode can be selected since it allows the next forwarding node to quickly forward the data packet. On the other hand, if the first receiving node cannot obtain position information about neighbor nodes or only old position information about neighbor nodes is available, a receiver-based forwarding mode can be selected. Also if the communication quality is bad, the receiver-based forwarding mode is selected since a selected node might fail to receive the packet. In addition, if the first receiving node has knowledge or position information about preferable nodes for relaying such as fixed stations (e.g. stationary nodes), the sender-based forwarding mode is selected and such a node is determined to be the next forwarding node.

According to a sender-based determination process, the data packet sent from first receiving node includes identification data identifying one or more of the neighbor nodes of the first receiving node as being determined to be the next forwarding node, wherein the neighbor nodes of the first receiving node, after receiving the data packet from the first receiving node, determine whether to forward the data packet based on the identification data.

Determining whether a next forwarding node shall be determined based on a receiver-based determination process or based on a sender-based determination process is performed on the basis of at least one of communication network conditions and communication network quality, a node density, data dissemination time constraints, availability of position data indicating positions of neighbor nodes, reliability of position data indicating positions of neighbor nodes, position data indicating stationary nodes, or data indicating one or more neighbor nodes as being stationary nodes. For example, if an application requires a low delay for dissemination, a sender-based forwarding mode can be selected since it allows the next forwarding node to quickly forward the data packet. On the other hand, if the first receiving node cannot obtain position information about neighbor nodes or only old position information about neighbor nodes is available, a receiver-based forwarding mode can be selected. Also if the communication quality is bad, the receiver-based forwarding mode can be selected since a selected node might fail to receive the packet. In addition, if the first receiving node has knowledge or position information about preferable nodes for relaying such as fixed stations (e.g. stationary nodes), the sender-based forwarding mode can be selected and such a preferable node can be determined to be the next forwarding node.

Also, already the source node (i.e. the node that first generates the data packet and is the first to send the data packet to other nodes which shall forward the data packet) can perform a step of determining whether a next forwarding node shall be determined based on a receiver-based determination process or based on a sender-based determination process. Moreover, the step of determining whether a next forwarding node shall be determined based on a receiver-based determination process or based on a sender-based determination process can be advantageously and independently applied to line-forwarding as well as area-dissemination methods (combining sender-received and receiver-based area-dissemination); e.g. according to a method as described above with reference to Fig. 2.

### Sixth embodiment (switching from line-forwarding dissemination to area-dissemination)

The following description of the sixth embodiment only relates to differences to the above-described embodiments of methods for disseminating a data packet in a communication network. Other features and aspects can be the same as in the above-described embodiments and their modifications.

According to the sixth embodiment, the method further comprises determining, at the first receiving node, if the destination is reached, and forwarding the data packet to all neighbor nodes of the first receiving node, if it is determined that the destination is reached. Accordingly, the line-forwarding procedure can be switched to an area-dissemination procedure as soon as the destination is reached by means of line-forwarding dissemination so as to thereafter flood the data packet among a plurality of nodes in the vicinity of the destination, i.e. nodes located within a certain radius of a destination point or destination position or nodes located within a destination area.

The destination can correspond to a destination position, wherein it is determined that the destination is reached if the distance between the position of the first receiving node and the position of the destination is smaller (or maybe smaller or equal) than a predetermined threshold distance, or the destination can correspond to a destination area, wherein it is determined that the destination is reached if the first receiving node is located inside the destination area. In case the destination corresponds to a destination area, it can also have an assigned destination point and it may be determined that the destination is reached if the distance between the position of the first receiving node and the position of the destination point is smaller (or maybe smaller or equal) than a predetermined threshold distance.

After switching from a line-forwarding procedure to an area-dissemination procedure, area dissemination can be performed according to known concepts. Most preferably, the area dissemination is then performed according to the method as described with reference to Fig. 2.

Also, in case it is already determined at the source node (i.e. at the node that first generates the data packet and is the first to send the data packet to other nodes which shall forward the data packet) that the source node is positioned such that the distance between the position of the source node and the position of the destination (or the position of a reference point indicating a destination area) is smaller (or maybe smaller or equal) than a predetermined threshold distance or the source node is already located inside a destination area, the data dissemination is already initially based on area-dissemination, e.g. according to the method as described with reference to Fig. 2. In other words, in case the source node is already located in a destination area or located close to a destination point, the line-forwarding part can be omitted.

Moreover, additional advantageous features which are described above with reference to line-forwarding dissemination such as e.g. the adaptive forwarding area angle determination of the above-described first modification of the first embodiment or the determination whether a next forwarding node shall be determined based on a receiver-based determination process or based on a sender-based determination process can be independently applied to area-dissemination. Also, regardless of whether the source node determines the line-forwarding mode of the area-dissemination, a source node can perform a step of determining whether a next forwarding node shall be determined based on a receiver-based determination process or based on a sender-based determination process.

### Seventh embodiment (receiver-based line-forwarding dissemination)

The following description of the seventh embodiment combines plural preferred aspects of the present invention. Other features and aspects can be the same as in the above-described embodiments and their modifications.

The method according to the seventh embodiment can be divided into two main processes, a sending process and a receiving process.

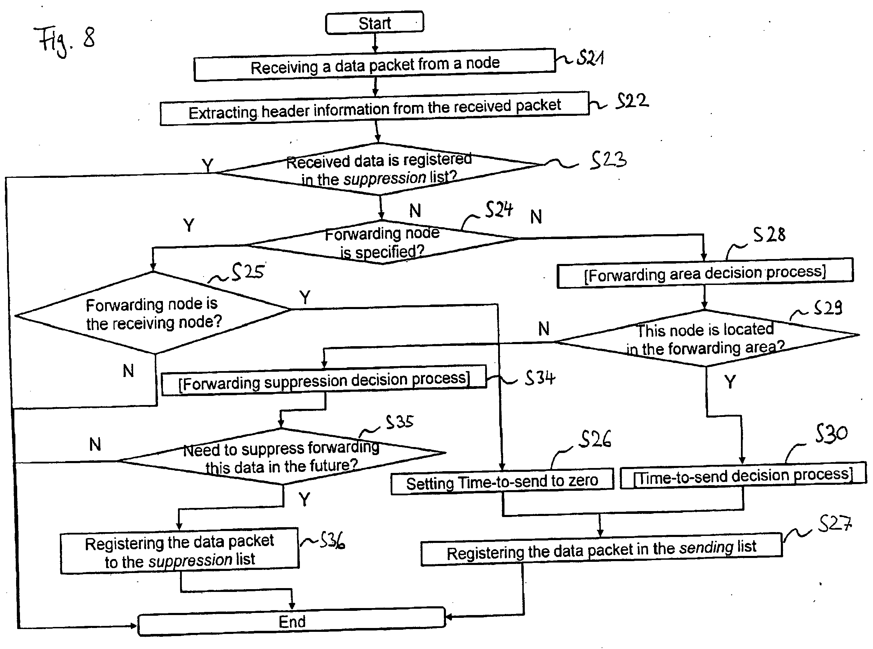

Fig. 8 illustrates a flowchart of an embodiment of such a receiving process. The receiving process comprises a step of receiving (S21) the data packet form a sending node at the first receiving node and a step of extracting header information (S22) from the received data packet (here, header information may include sender position data, receiver position data, destination position data and/or next forwarding node data such as forwarding node identification data). Then, it is checked (S23), whether the received data is already registered or at least indicated in a so-called *suppression list* (explained below). In the affirmative, the receiving process ends. If, however, the received data is not already stored or at least indicated in a so-called *suppression list,* it is checked (S24), whether a next forwarding node is indicated or specified in the header information, e.g. by forwarding node identification data.

If a next forwarding node is indicated or specified in the header information, it is checked (S25) whether the first receiving node is the indicated or specified next forwarding node. In the affirmative, a corresponding time-to-send is set to zero (S26) and the data packet is registered in a so-called *sending list* (S27) for being forwarded according to the sending process as described later. Then, the receive process ends. If, however, the first receiving node is not the indicated or specified next forwarding node, the receiving process is ended.

If, however, a next forwarding node is not indicated or specified in the header information, the receiving process continues with a next forwarding area determination process (S28) and it is checked (S29) whether the first receiving node is located in the determined forwarding area (the determination of the forwarding area is either performed at the receiving node as described with reference to one of the above embodiments or it is already indicated in the header information, i.e. being already determined by the sending node). In the affirmative, a time-to-send determination process is performed (i.e. a time-to-send period is determined according to one of the above described methods, e.g. based on a sender-receiver distance or based on a destination-receiver distance). Then, the data packet is registered in the *sending list* (S27) for being forwarded according to the sending process as described later and the receiving process ends.

If, however, it is determined in step S29 that the first receiving node is not located in the determined forwarding area, the receiving process continues with a step S34 of performing a forwarding suppression decision process in case the result of step S29 is NO. The forwarding suppression decision process will be described later. Then, the receiving process continues with a step S35 of checking whether it is required to suppress the forwarding of the data packet in the future. If not, the receiving process ends. In the affirmative, however, the data packet is registered to the suppression list (S36) and then the receiving process ends.

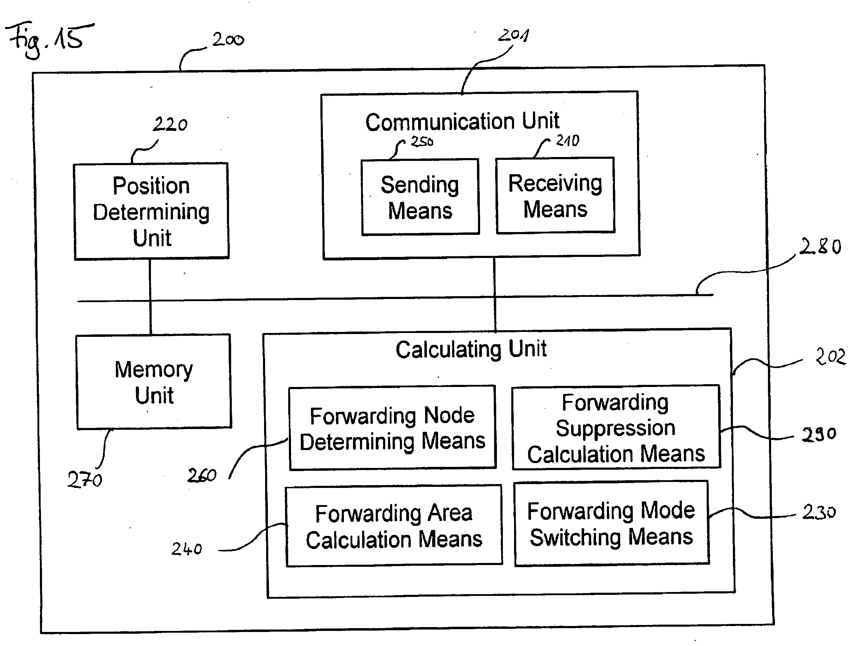

The receiving process can be performed by means of the receiving means 250 of the apparatus of Fig. 15 (possibly in combination with calculation unit 202 and/or memory unit 270).

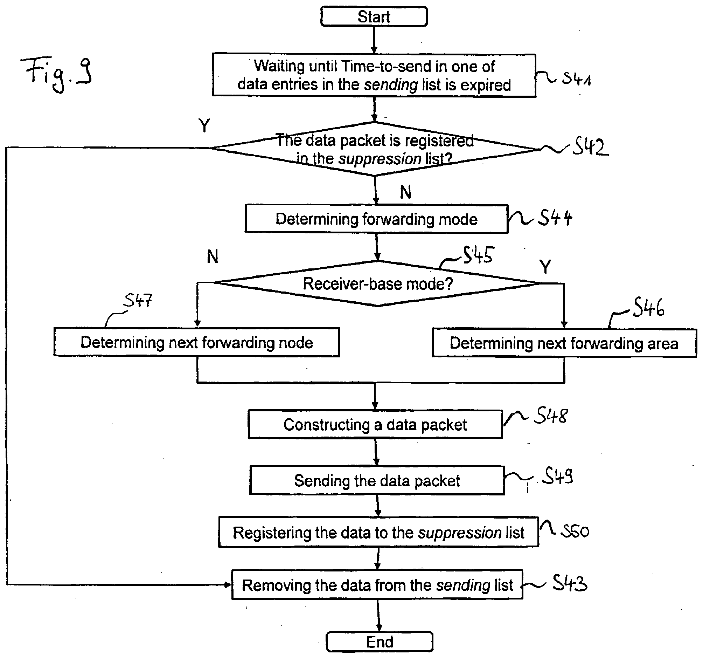

Fig. 9 illustrates a flowchart of an embodiment of the sending process. This sending process regularly monitors the so-called *"sending list"* which corresponds to a list of data to be sent and its related information provided in a memory means of an embodiment of an apparatus for disseminating a data packet in a wireless communication network comprising a plurality of network nodes. Such a *sending list* may indicate data or data packets that have been received from other nodes and shall be forwarded and/or data packets that are newly generated (i.e. newly generated at a source node so as to be indicated in a *sending list* of the source node) and shall be sent to other nodes in the vicinity of the source node (e.g. direct area-dissemination) or to a destination (destination point or destination area, e.g. first a line-forwarding part). Such a newly generated data packet at a source node or the generation of such a data packet can be e.g. be requested by an application (e.g. a message to be sent is generated).

At first, in step S41, the receiving node waits until a time-to-send period in one of the data entries in the above-mentioned *sending list* is expired. Then, it is checked in a step S42 whether the data packet is indicated in a so-called *suppression list* (will be described later) and in the affirmative, the sending process continues with a step S43 of removing the corresponding data entry from the *sending list.* Then, the sending process ends.

If, however, the data packet is not indicated in the *suppression list,* the sending process continues with a step S44 of determining a forwarding mode, i.e. if the mode for determining the next forwarding node shall be receiver-based or sender-based. If the mode shall be receiver-based, the sending process continues with a step S46 of determining a next forwarding area, for example according to any of the above-described embodiments (please note that the next forwarding area is here determined by the first receiving node acting as a next sending node and not the next receiving node, but it can also be omitted here so that the next receiving node may determine the next forwarding area), and if the mode shall be sender-based, the sending process continues with a step S47 of determining a next forwarding node.

Then, after step S46 as well as after step S47, the sending process continues with a step S48 of constructing a data packet (i.e. combining the previously received data packet with potential new header information) for sending (i.e. forwarding) the data packet in step S49. Here, the data packet is constructed in accordance with the selected mode, i.e. in dependence on the steps S45 to S47. Thereafter, the data is added to the *suppression list* (S50) and removed from the *sending list* (S43). Then, the sending process ends. It is to be noted that the sending process in step S50 registers data packets in the suppression list after sending them (S49) in order to avoid duplicate forwarding.

The sending process can be performed by means of the sending means 250 of the apparatus of Fig. 15 (possibly in combination with calculation unit 202 and/or memory unit 270).

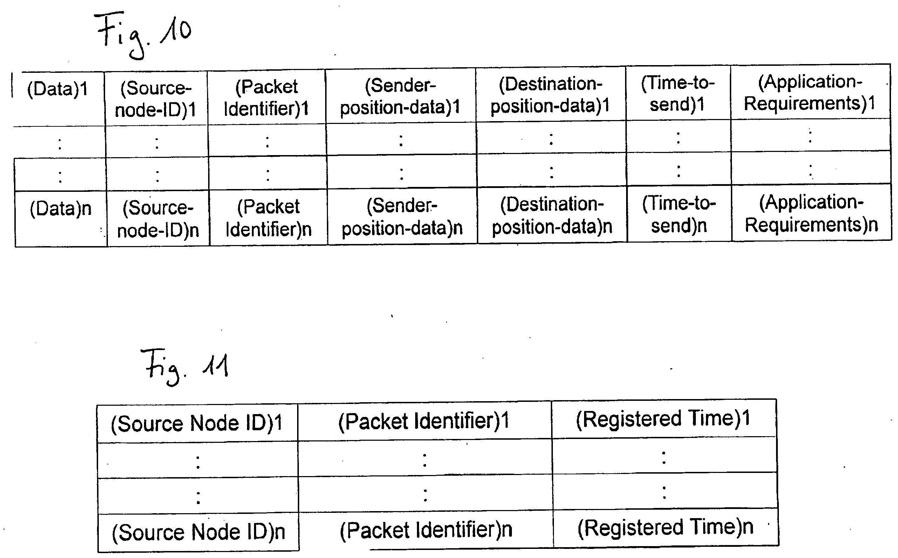

Fig. 10 shows an example of a *sending list.* The *sending list* is a list indicating data packets to be sent and its related information provided in a memory means. The sending list in Fig. 11 includes the following information:
- (Data): i.e. indicating data or data packets to be sent;
- (Source-node-ID): indicating an identifier of the node which created the data packet (e.g. IP address and/or Vehicle ID, or the like);
- (Packet-identifier): indicating an identifier of this data packet;
- (Sender-position-data): indicating position information of the node (sending node) which sent this data packet, contains position data, speed, direction, measurement time and/or the like;
- (Destination-position-data): indicating position information of the destination to which this data or data packet shall be disseminated, which may include, for example, information about geographical area or points;
- (Time-to-send): indicating a waiting time (i.e. a time-to-send) until this data is ready to sent; and/or
- (Application-requirements): indicating information of the application requirements for the dissemination (e.g. delivery delay, delivery reliability or the like).

Fig. 11 shows an example of a *suppression list.* If it is detected in the above-mentioned sending process that there is a data entry for which the time-to-send period is expired (S41), it is checked if the corresponding data has been registered in the *suppression list* (S42), which is the list indicating data or data packets which are to be suppressed for forwarding. The *suppression* list is provided in a memory means. The database of the *suppression list* comprises:
- (Source-Node-ID): same as the Source-Node-ID of the *sending list,*
- (Packet Identifier): same as the Packet Identifier of the *sending list,* and/or
- (Registered Time): indicating a time when this data entry was registered in the *suppression list.*

It is to be noted that a registered time is used for erasing old entries from the *suppression list.* If the time is globally synchronized in the network, a timestamp of a data packet could be also used instead.

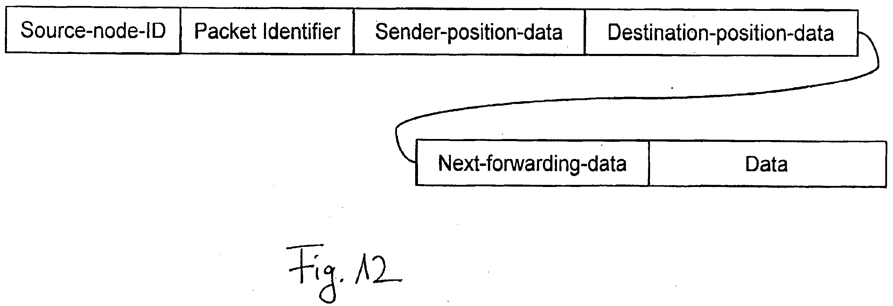

Fig. 12 schematically illustrates an embodiment of a data packet format as constructed in step S48 of Fig. 9. The data packet can comprise:
- Source-node-ID: indicating an identifier of the node which created the data packet (e.g. IP address and/or Vehicle ID, or the like);
- Packet Identifier: indicating an identifier of this data packet (usually created by source node; when forwarding the data packet, a node usually does not change this identifier);
- Sender-position-data: indicating a position of the sending node;
- Destination-position-data: indicating a position of the destination (or also other information such as e.g. radius of a destination area);
- Next-forwarding-data: indicating the ID of the node selected as the next forwarding node (in the sender-based forwarding mode) and/or the forwarding area information indicating a forwarding area e.g. with the position information of a reference point (in the receiver based forwarding mode); and/or
- Data of the data packet: application data which is to be disseminated to the specified destination.

The above lists, data and data packets can be e.g. stored in the memory unit 270 (memory means) of the apparatus of Fig. 15.

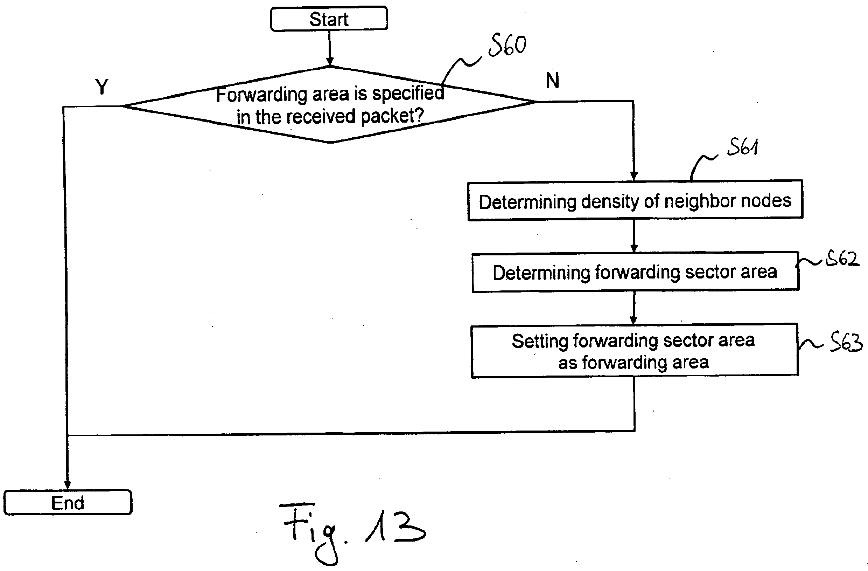

Fig. 13 illustrates an example for a "forwarding area decision process" as mentioned above. In a step S60, it is checked whether the forwarding area is already specified in the received data packet (i.e. already determined by the sending node). In the affirmative, the forwarding area decision process ends. If the forwarding area is, however, not already specified in the received data packet, the forwarding area decision process continues with a step S61 of determining the density of neighbor nodes, and in a step S62, a forwarding area is determined based on the density of neighbor nodes. E.g. a size of the forwarding area is determined based on the density of neighbor nodes e.g. by selecting an angle α of a circular sector in accordance with the density of neighbor nodes. Thereafter, in step S63, the determined forwarding area is set as the forwarding area. Then, the forwarding area decision process ends.

The forwarding area decision process can be performed by means of the forwarding area calculation means 240 of the apparatus of Fig. 15 (possibly in combination with calculation unit 202 and/or memory unit 270).

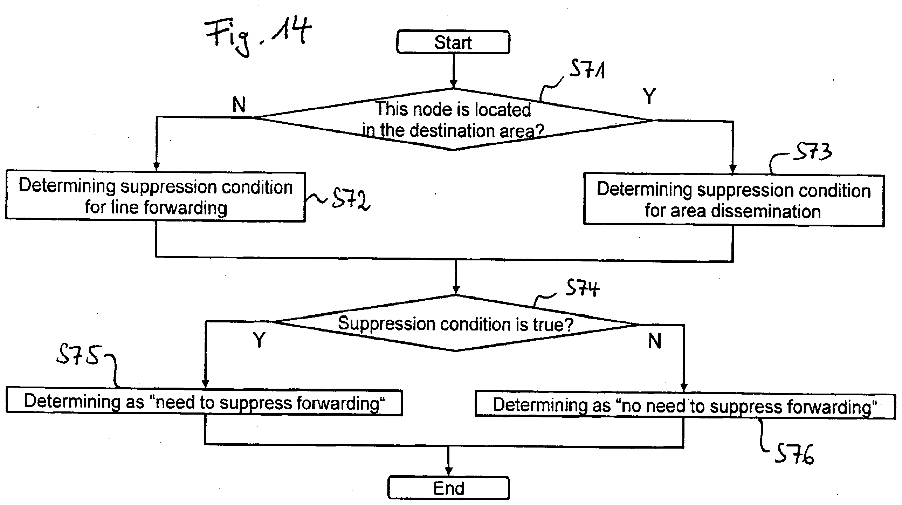

Fig. 14 illustrates an example for a "forwarding suppression decision process" as mentioned above. First, it is checked in step S71 whether the receiving node is located in the destination area (or closer to a destination position than a predetermined threshold). In the affirmative, the forwarding suppression decision process continues with a step S73 of determining a suppression condition for area-dissemination (e.g. as described with reference to Fig. 2) and then continues with a check, whether a suppression condition is true (S74). A suppression condition may be any of the above-mentioned reasons for refraining from forwarding (especially the ones described with reference to Fig. 2). Alternatively, if the receiving node is not located in the destination area (or not closer to a destination position than a predetermined threshold), the forwarding suppression decision process continues with a step S72 of determining a suppression condition for line-forwarding (e.g. one or more of the suppression condition as discussed with the above described embodiments of the invention directed to line-forwarding, excluding the ones described with reference to Fig. 2; for example, if the sending node is nearer to the destination than the receiving node, one suppression condition may be regarded true) and then continues with step S74. If the suppression condition is true, it is determined that there is a need to suppress the forwarding of the data packet (S75) and the forwarding suppression decision process ends. If the suppression condition is not true, it is determined that there is no need to suppress the forwarding of the data packet (S76) and the forwarding suppression decision process ends.

The forwarding suppression decision process can be performed by means of the forwarding suppression calculation means 290 of the apparatus of Fig. 15 (possibly in combination with calculation unit 202 and/or memory unit 270).

### Embodiment of an apparatus according to the present invention

Fig. 15 schematically shows an apparatus 200 for disseminating a data packet towards a destination in a communication network, in particular preferably via multi-hop communication in a wireless ad-hoc network (e.g. a VANET), comprising a plurality of network nodes according to an embodiment of the present invention. Fig. 15 shows schematically the architectural overview of the apparatus 200 for the wireless communication systems. The apparatus 200 comprises a position determining unit 220 for determines the position of the node to which the apparatus is mounted or also other nodes. It can be realized, for example, by a global navigation satellite system position determination unit using global navigation satellite system systems such as GPS and Galileo, a gyroscope, a compass, a gyrocompass, a pulse counter and/or a tachometer. The apparatus 200 further comprises a memory unit 270 for storing programs and databases such as for example the above-mentioned lists or the data of data packets and all other data which needs to be stored for realizing the embodiments. It can be realized, for example, by hard disk, flash memory, ROM, RAM and other possible memory means or combinations thereof. The apparatus further comprises a calculating unit 202 which may be a processing means for determinations and calculations required for the present invention and/or executing processing. It can be realized, for example, by a CPU or a computer means comprising a CPU and memory means. It comprise further a forwarding node determining means 260 for determining a forwarding node, a forwarding area calculation means 240 for determining a forwarding area, and a forwarding suppression calculation means 290 for determining if forwarding the data packet shall be suppressed, a forwarding mode switching means 230 for switching between a receiver-based and a sender-based mode and/or for switching between line-forwarding dissemination and area-dissemination. Those means 230, 240, 260, and 290 may be embodied by running programs stored in the Memory Unit 270 running on a processing means which can be comprised in the calculation unit 202.

The apparatus further comprises a communication Unit for managing sending and receiving data through the network according to one or more protocols. It can be realized, for example, by a wireless network card, radio means, Bluetooth and other wireless communication means. It comprises further sending means 250 and receiving means 210 for sending and for receiving data. All or at least some of the means and/or units of the apparatus 200 can be connected by an internal communication line such as a bus. The above described apparatus can be realized in software, in hardware or in a combination thereof.

The apparatus 200 of Fig. 15 is configured to perform a method according to one or more of the above described first to seventh embodiment. However, some embodiments may not require all means or units shown in Fig. 15. For example, the first to fifth embodiment may not require the forwarding node determining means 260 and the forwarding mode switching means 230.

### Another embodiment of an apparatus according to the present invention (relating to the third embodiment)

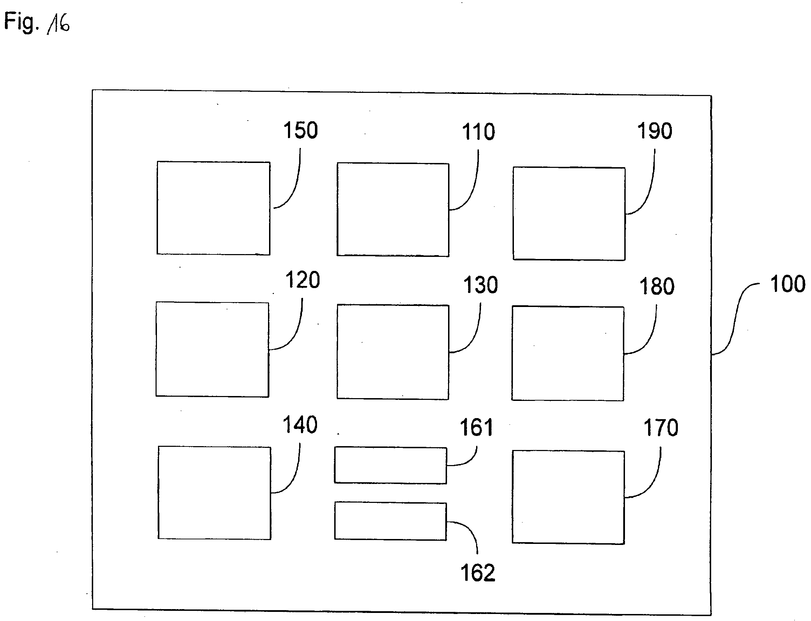

Fig. 16 schematically shows an apparatus for disseminating a data packet towards a destination in a communication network, in particular preferably via multi-hop communication in a wireless vehicular mobile ad-hoc network, comprising a plurality of network nodes according to the third embodiment of the present invention. The apparatus 100 is comprised in a node (in the following referred to as receiving node) of a wireless communication network and configured to disseminate a data packet towards a destination as shown in Fig. 16 comprises receiving means 110 for receiving a data packet sent from a sending node, wherein the data packet comprises sending position data which indicates a position of the sending node and receiver position determining means 120 for determining receiver position data, wherein the first receiver position data indicates a position of the receiving node. Such means may determine the position via satellite systems such as GPS or GALILEO, based on signal triangulation, or other real-time or at least quasi real-time position determination systems.

The apparatus 100 further comprises destination position determining means 130 for determining destination position data, wherein the destination position data indicates a position of the destination to which the data packet is to be disseminated or forwarded via multi-hop communication between nodes of the network, forwarding sector determining means 140 for determining a forwarding area based on the sending position data and the destination position data, and sending means 150 for sending information to other nodes, in particular for forwarding the data packet to neighbor nodes of the first receiving node, if the first receiving node is located inside the determined forwarding area.

The apparatus 100 further comprises neighbor node position determining means 161 for determining the positions of neighbor nodes of the receiving node and neighbor node density determining means (162) for determining the density of neighbor nodes of the receiving node, e.g. based on a beaconing system by periodically sending and receiving beacon signals comprising position information, wherein the forwarding sector determining means 140 is configured to determine the forwarding area such that the opening angle of the forwarding sector angle is determined based on the determined positions of neighbor nodes of the receiving node and the density of neighbor nodes of the receiving node.

Furthermore, the apparatus 100 comprises sender-receiver distance determining means 170 for determining a sender-receiver distance, wherein the sender-receiver distance indicates a distance between the sending node and the receiving node based on the sending position data and the receiver position data, and time-to-send period determining means 180 for determining a time-to-send period based on the determined sender-receiver distance, wherein the sending means 150 is configured to forward the data packet to neighbor nodes of the receiving node, when the determined time-to-send period expires after the time of receiving the data packet from the sending node and if the receiving node is located inside the determined forwarding area and the sending means 150 is further configured to refrain from forwarding the data packet, if the receiving means 110 receives the data packet forwarded from a second receiving node (a neighbor node of the receiving node) after receiving the data packet from the sending node before the determined time-to-send period expires.

Furthermore, the apparatus 100 comprises location determining means 190 for determining, whether the neighbor nodes of the receiving node are located in the communication range of the second receiving node, wherein the sending means 150 is configured to forward the data packet to neighbor nodes of the receiving node, if the receiving node is located inside the determined forwarding area and at least one of the neighbor nodes of the receiving node is located outside the communication range of the second receiving node.

The location determining means 190 is further configured to determine, if the neighbor nodes of the receiving node are located in the communication range of the sending node based on the position of the sending node and the positions of the neighbor nodes, wherein the sending means 150 is configured to refrain from forwarding the data packet, when it is determined that all neighbor nodes of the receiving node are located in the communication range of the sending node. Furthermore, the apparatus comprises storage means (not shown) for storing a received data packet, and the various kinds of determined data, e.g. position data or distance data.

According to the above description, the apparatus 100 comprises all means for carrying out a method for disseminating a data packet towards a destination according to the third embodiment of the present invention. However, it is to be noted that not all of the above described means and features correspond to features of an apparatus that are essential for the present invention and further embodiments of the present invention can be realized by omitting one or more of the below described means of features.

### Summary

Summarizing, in the above-mentioned embodiments, the following different concepts included in preferred embodiments of the present invention are described, which can also advantageously be applied independently or combined differently:
(1) Receiver-based line-forwarding:
   When a node A shall disseminate data or information to a destination area or point D, it broadcasts the information to all of its one hop neighbors. When receiving the broadcast data packet from node A, all its neighbors that have received this data packet calculate the point P1 which is the geometrical intersection between the circle limiting the communication range of node A (Rmax) and a straight line from node A to destination D. The point P1 is used to determine a potential forwarding area. All nodes located within this potential forwarding area enter into a competition for being the next forwarding node for forwarding the data packet. Preferably, the node which is the closest to the destination amongst nodes located within the determined forwarding area, forwards at an earlier time by broadcasting the data packet, and other nodes in the forwarding area stop their forwarding procedure after receiving the forwarded data packet again. The operation repeats until the destination D is reached. This method allows robust line-forwarding to reach the destination by automatic forwarding by subsequent potential forwarding nodes even when a first potential candidate node fails to forward.
(2) Adaptive forwarding area selection:
   i. For area based dissemination: The purpose of having an adaptive forwarding area selection (i.e. selecting adaptively the size of the forwarding area) is to determine a non-optimal relay forwarding area and thereby suppress the non-optimal forwarding nodes within that specific forwarding area. For example, by varying the size of the forwarding area (e.g. by varying the angle of a circular sector forwarding area or varying the radius of a circular forwarding area) according to the density of nodes around the sending node, the number of potential forwarding nodes can be varied. Under low density scenarios, a smaller forwarding area size suppresses a smaller portion of nodes to forward the data packet (thus improving connectivity) and under high density scenarios, a larger forwarding area size suppresses a larger proportion of nodes to forward the data packet (thus reducing bandwidth consumption).
   ii. For line-forwarding: The purpose of adaptive forwarding area selection is to determine a potential forwarding area and thereby only allow the nodes within the area to take part in forwarding process. Under low density scenarios, a larger forwarding area size is determined so that there is more probability to find a node within the desired forwarding area and under high density scenarios, a smaller forwarding area size is selected, as the probability of finding a node within the chosen forwarding area is high.
(3) Reliability Enhancement:
   There might occur a situation where a suppressed node is able to reach one or more nodes not covered by either the source node or the previous forwarding node. In order to avoid circumstances like these and thereby improve the reliability, the node which undergoes a suppression process can verify whether it is able to cover additional nodes apart from the nodes covered by the source or the previous forwarder and in the event that it covers one or more nodes, it does not drop the packet (as it would do so in a normal suppression method) and eventually schedules the data for re-transmission despite being suppressed (can be applied to line-forwarding and area dissemination; even more advantageous to area dissemination since redundant transmissions can be advantageously avoided).
(4) Adaptive hybrid method receiver-based/sender-based method applicable for line-forwarding and/or area-dissemination:
   It is proposed a method according to which it is adaptively switched between the two algorithms of how to determine the next forwarder, i.e. a sender-based forwarding method and a receiver-based forwarding method, depending on application requirements and network conditions. When sending a data packet, a node judges which algorithm is better based on the situation, and executes the sending process according to the selected algorithm. The receiving node judges the selected algorithm in the packet, and executes the receiving process according to it. By introducing a sender-based forwarding method only in appropriate situations in addition to a receiver-based forwarding method as a basis, the delivery delay can be significantly reduced with high delivery ratio being kept, because a sender-based forwarding method can reduce the waiting time in forwarding.
(5) Flexible reference forwarding area specifying:
   When a sending node (or also a receiving node) knows a preferable area to relay the data packet, it specifies the area as the reference area (i.e. the forwarding area) for selecting the next forwarding node by the receiving nodes, instead of the next forwarding node. The next forwarding node is selected among nodes, which are located in the reference area (i.e. the forwarding area), in a distributed way as the receiver-based forwarding method. By specifying the next forwarding area, the sending node can specify a preferable geographical route for forwarding the data packet, like in the sender-based forwarding mode. This can improve delivery delay and delivery ratio even in a specific environments where the preferable route to the destination is not the same as the direction to the destination.

All of the above-described features, specific details and aspects of the structure of the above-described embodiments according to the present invention can be exchanged or combined in any way as a whole or in part without departing from the scope of disclosure of the present invention for forming further embodiments of the present invention optimized for the respective application. As far as such modifications are readily apparent for an expert skilled in the art they shall be regarded as implicitly disclosed by the above description without specifying explicitly every possible combination, for the sake of conciseness of the description. Thus, it is to be understood that the scope of the present invention is not limited to the preferred embodiments described above with reference to the schematic drawings but that also combinations of features, exchange of features and/or modifications of features of the above-described preferred embodiments shall be regarded as further, implicitly disclosed embodiments according to the present invention.

## Claims

1. Method for disseminating data in a communication network comprising a plurality of network nodes, comprising:
- receiving, at a first receiving node (F1; N F), a data packet sent from a sending node (S; F1) which shall be forwarded to a destination (D),
- determining a position of the first receiving node (F1; NF),
- determining the positions of neighbor nodes of the first receiving node (F1; NF) and/or the density of neighbor nodes of the first receiving node (F1; NF),
- determining a forwarding area (BS1; BS2) on the basis of a position of the destination (D),
- determining if the first receiving node (F1; NF) is located inside the determined forwarding area (BS1; BS2), and
- determining, at the first receiving node (F1; NF), whether to forward the data packet so that the data packet can be received by one or more neighbor nodes (B1, B2, B3, S, NF; B3, F1) of the first receiving node (F1; NF), on the basis of a determination if the first receiving node (F1; NF) is located inside the determined forwarding area (BS1; BS2),
wherein the forwarding area (BS1; BS2) is determined such that the size of the forwarding area (BS1; BS2) is determined based on the determined positions of neighbor nodes of the first receiving node (F1; NF) and/or the density of neighbor nodes of the first receiving node (F1; NF).

2. Method according to claim 1, **characterized in that**
the first receiving node (F1; NF) forwards the data packet to one or more neighbor nodes (B1, B2, B3, S, NF; B3, F1) of the first receiving node (F1; NF) if the first receiving node (F1; NF) is located inside the determined forwarding area (BS1; BS2).

3. Method according to claim 1 or 2, **characterized in that**
said determining the forwarding area (BS1; BS2) is performed at the sending node (S; F1), wherein forwarding area data sent from the sending node (S; F1) is received at the first receiving node (F1; NF), said forwarding area data indicating the determined forwarding area (BS1; BS2); or
said determining the forwarding area (BS1; BS2) is performed at the first receiving node (F1; NF).

4. Method according to at least one of claims 1 to 3, **characterized in that** said determining the forwarding area (BS1; BS2) is performed further based on the position of the sending node (S; F1), a position of a reference point, a position of one or more traffic network intersections, a position of one or more stationary nodes of the communication network and/or network topology information,
wherein, if said determining the forwarding area (BS1; BS2) is performed at the first receiving node (F1; NF) and further based on the position of the sending node (S; F1), the position of the sending node (S; F1) is indicated by sender position data received at the first receiving node (F1; NF) from the sending node (S; F1), and
wherein the communication network is a vehicular mobile ad-hoc network comprising network nodes mounted to vehicles of a traffic network, wherein said network topology Information comprises navigation data indicating a traffic network topology of the traffic network and/or digital map data.

5. Method according to claim 4, **characterized in that** the forwarding area (BS1; BS2) is determined such that it covers an area of one or more traffic network intersections of the traffic network, the position of the one or more traffic network intersections being indicated by the navigation data.

6. Method according to at least one of claims 1 to 5, **characterized in that** the forwarding area (BS1; BS2) determined such that It is directed from the position of the sending node (S; F1) towards the position of the destination (D).

7. Method according to at least one of claims 1 to 6, **characterized in that** the determined forwarding area (BS1; BS2) substantially corresponds to a circular sector of the circular communication range (Rmax) of the sending node (S; F1) having the sending node (S; F1) in the center with a radius according to the communication range (Rmax) of the sending node (S; F1).

8. Method according to at least one of claims 1 to 7, **characterized in that** the forwarding area (BS1; BS2) is determined such that it is directed from the position of the sending node (S; F1) towards the position of the destination (D) **in that** determining the forwarding area (BS1; BS2) comprises calculating a position of an intersection point (P1; P2) which is the geometrical intersection between the border of the communication range of the sending node (S; F1) and a straight line between the position of the sending node (S; F1) and the position of the destination (D).

9. Method according to at least one of the preceding claims, **characterized in that** the forwarding area (BS1; BS2) substantially corresponds to a circular sector of the circular communication range of the sending node (S; F1) having the sending node (S; F1) in the center with a radius according to the communication range (Rmax) of the sending node (S; F1), wherein determining the forwarding area (BS1; BS2) comprises determining the opening angle (α) of the forwarding area (BS1; BS2) based on the determined positions of neighbor nodes of the first receiving node (F1; NF), the density of neighbor nodes of the first receiving node (F1; NF), and/or based on a minimal opening angle default value.

10. Method according to at least one of the preceding claims, further **characterized by**
- determining the position of neighbor nodes of the first receiving node (B4), when the first receiving node (B4) receives the data packet forwarded from a second receiving node (F1) after receiving the data packet from the sending node (S) before sending the data packet,
- determining, whether the neighbor nodes of the first receiving node (B4) are located in the communication range of the second receiving node (F1), and
- sending the data packet received from the sending node (S) to neighbor nodes (S, B1, B2, B3, C1, C2, F1, R) of the first receiving node (B4), if the first receiving node (B4) is located inside the determined forwarding area (BS1) and at least one of the neighbor nodes (C1, C2, C3) of the first receiving node (B4) is located outside the communication range of the second receiving node (F1), or
- refraining from sending the data packet to neighbor nodes of the first receiving node (B4), if all neighbor nodes of the first receiving node (F1) are located inside the communication range of the second receiving node (F1).

11. Method according to at least one of the preceding claims, further **characterized by**:
- determining a first sender-receiver distance, wherein the first sender-receiver distance indicates a distance between the position of the sending node (S) and the position of the first receiving node (F1) and/or determining a first destination-receiver distance, wherein the first destination-receiver distance indicates a distance between the position of the first receiving node (F1) and the position of the destination (D) or between the position of the first receiving node (F1) and a position of an intermediate destination reference point,
- receiving, at a second receiving node (B2), the data packet sent from the sending node (S),
- determining a position of the second receiving node (B2), and
- determining a second sender-receiver distance, wherein the second sender-receiver distance indicates a distance between the position of the sending node (S) and the position of the second receiving node (B2) and/or determining a second destination-receiver distance, wherein the second destination-receiver distance indicates a distance between the position of the second receiving node (B2) and the position of the destination (D) or between the position of the second receiving node (B2) and a position of an intermediate destination reference point,
wherein the first receiving node (F1) sends the data packet to one or more neighbor nodes of the first receiving node (F1), if the first sender-receiver distance is larger than the second sender-receiver distance and/or wherein the first receiving node (F1) sends the data packet to one or more neighbor nodes of the first receiving node (F1), if the first destination-receiver distance is smaller than the second destination-receiver distance, and
wherein the second receiving node (B2) refrains from forwarding the data packet,
when the second receiving node (B2) receives the forwarded data packet from the first receiving node (F1), even if the second receiving node (B2) is located inside the determined forwarding area (BS1) and, or
when the second receiving node (B2) receives the forwarded data packet from the first receiving node (F1) and if all neighbor nodes of the second receiving node (B2) are located in the communication range of the first receiving node (F1), even if the second receiving node (B2) is located inside the determined forwarding area (BS1).

12. Method according to at least one of the preceding claims, **characterized in that** in a case in which it is determined that the first receiving node (F1; NF) shall forward the data packet to one or more neighbor nodes (B1, B2, B3, S, NF; B3, F1) of the first receiving node (F1; NF), the method further comprises:
- determining, at the first receiving node, whether a next forwarding node shall be determined based on a receiver-based determination process or based on a sender-based determination process, a next forwarding node being a node which forwards the data packet after receiving the data packet from the first receiving node (F1; NF),
wherein according to a receiver-based determination process, the first receiving node (F1; NF) sends the data packet to all of its neighbor nodes (B1, B2, B3, S, NF; B3, F1) which, after receiving the data packet from the first receiving node (F1; NF), determine whether to forward the data packet, and
according to a sender-based determination process, the first receiving node (F1; NF) determines which of its neighbor nodes (B1, B2, B3, S, NF; B3, F1) shall act as a next forwarding node for further forwarding the data packet.

13. Method according to claim 12, **characterized in that** according to a sender-based determination process, the data packet sent from first receiving node (F1; NF) includes identification data identifying one or more of the neighbor nodes (B1, B2, B3, S, NF; B3, F1) of the first receiving node (F1; NF) as being determined to be the next forwarding node, wherein the neighbor nodes (B1, B2, B3, S, NF; B3, F1) of the first receiving node (F1; NF), after receiving the data packet from the first receiving node (F1; NF), determine whether to forward the data packet based on the identification data.

14. Method according to claim 12 or 13, **characterized in that** determining whether a next forwarding node shall be determined based on a receiver-based determination process or based on a sender-based determination process is performed on the basis of at least one of communication network conditions and communication network quality, a node density, data dissemination time constraints, availability of position data indicating positions of neighbor nodes, reliability of position data indicating positions of neighbor nodes, position data indicating stationary nodes, or data indicating one or more neighbor nodes as being stationary nodes.

15. Method according to at least one of the preceding claims, **characterized in that**
the first receiving node (F1; NF) waits until the expiration of a time-to-send period after receiving the data packet from the sending node (S; F1), which time-to-send period is determined on the basis of at least two of the position of the sending node, the position of the destination (D), and the position of the first receiving node (F1; NF).
wherein the first receiving node (F1; NF) refrains from forwarding the data packet to one or more neighbor nodes (B1, B2, B3, S, NF; B3, F1) of the first receiving node (F1; NF), if the data packet is received again at the first receiving node (F1; NF) sent from a node other than the sending node (S; F1) before the expiration of the time-to-send period.

16. Method according to at least one of the preceding claims, further **characterized by**
- determining, at the first receiving node (F1; NF) if the destination (D) is reached, and
- forwarding the data packet to all neighbor nodes (B1, B2, B3, S, NF; B3, F1) of the first receiving node (F1; NF), if it is determined that the destination (D) is reached,
wherein the destination (D) corresponds to a destination position and it is determined that the destination (D) is reached if the distance between the position of the first receiving node (F1; NF) and the position of the destination (D) is smaller than a predetermined threshold distance, or
the destination (D) corresponds to a destination area and it is determined that the destination (D) is reached if the first receiving node (F1; NF) is located inside the destination area.

17. Apparatus for disseminating data according to a method according to at least one of the preceding claims in a communication network comprising a plurality of network nodes, said apparatus being adapted to be mounted on a first receiving node of the plurality of network nodes and comprising:
- receiving means (110) for receiving, at the first receiving node (F1; NF), a data packet sent from a sending node (S; F1), which data packet shall be forwarded to a destination (D),
- receiver position determining means (120) for determining a position of the first receiving node (F1; NF),
- means (161; 162) for determining the positions of neighbor nodes of the first receiving node (F1; NF) and/or the density of neighbor nodes of the first receiving node (F1; NF),
- forwarding area determining means (140) for determining a forwarding area (BS1; BS2) on the basis of a position of the destination (D),
- forwarding determining means for determining whether to forward the data packet to one or more neighbor nodes (B1, B2, B3, S, NF; B3, F1) of the first receiving node (F2; NF) on the basis of a determination if the first receiving node (F1; NF) is located inside the determined forwarding area (BS1; BS2), and
- sending means (150) for forwarding the data packet to one or more neighbor nodes of the first receiving node,
wherein the forwarding determining means is configured to determine the forwarding area (BS1; BS2) such that the size of the forwarding area (BS1; BS2) is determined based on the determined positions of neighbor nodes of the first receiving node (F1; NF) and/or the density of neighbor nodes of the first receiving node (F1; NF).

18. A computer program product comprising computer program code means configured to adapt an apparatus for disseminating data in a communication network comprising a plurality of network nodes, in particular an apparatus for disseminating data in a communication network which comprises sending means, receiving means, memory means, and processing means, such that the apparatus is adapted to perform a method for disseminating data In a communication network comprising a plurality of network nodes according to at least one of claims 1 to 16.

## Patentansprüche

1. Verfahren zur Verteilung von Daten in einem Kommunikationsnetz mit mehreren Netzknoten, mit:
- Empfangen eines von einem Sendeknoten (S; F1) gesendeten Datenpakets an einem ersten Empfangsknoten (F1; NF), das an ein Ziel (D) weitergeleitet werden soll,
- Bestimmen einer Position des ersten Empfangsknotens (F1; NF),
- Bestimmen der Positionen von Nachbarknoten des ersten Empfangsknotens (F1; NF) und/oder der Dichte von Nachbarknoten des ersten Empfangsknotens (F1; NF),
- Bestimmen eines Weiterleitungsbereichs (BS1; BS2) auf der Grundlage einer Position des Ziels (D),
- Bestimmen, ob sich der erste Empfangsknoten (F1; NF) innerhalb des bestimmten Weiterleitungsbereichs (BS1; BS2) befindet, und
- Bestimmen am ersten Empfangsknoten (F1; NF), ob das Datenpaket weitergeleitet werden soll, so dass das Datenpaket von einem oder mehreren Nachbarknoten (B1, B2, B3, S, NF; B3, F1) des ersten Empfangsknotens (F1; NF) auf der Grundlage einer Bestimmung, ob sich der erste Empfangsknoten (F1; NF) innerhalb des bestimmten Weiterleitungsbereichs (BS1; BS2) befindet, empfangen werden kann,
wobei der Weiterleitungsbereich (BS1; BS2) so bestimmt wird, dass die Größe des Weiterleitungsbereichs (BS1; BS2) auf der Grundlage der bestimmten Positionen von Nachbarknoten des ersten Empfangsknotens (F1; NF) und/oder der Dichte von Nachbarknoten des ersten Empfangsknotens (F1; NF) bestimmt wird.

2. Verfahren nach Anspruch 1, **dadurch gekennzeichnet, dass** der erste Empfangsknoten (F1; NF) das Datenpaket an einen oder mehrere Nachbarknoten (B1, B2, B3, S, NF; B3, F1) des ersten Empfangsknotens (F1; NF) weiterleitet, wenn sich der erste Empfangsknoten (F1; NF) innerhalb des bestimmten Weiterleitungsbereichs (BS1; BS2) befindet.

3. Verfahren nach Anspruch 1 oder 2, **dadurch gekennzeichnet, dass**
das Bestimmen des Weiterleitungsbereichs (BS1; BS2) am Sendeknoten (S; F1) erfolgt, wobei vom Sendeknoten (S; F1) gesendete Weiterleitungsbereichsdaten am ersten Empfangsknoten (F1; NF) empfangen werden und die Weiterleitungsbereichsdaten den bestimmten Weiterleitungsbereich (BS1; BS2) angeben; oder
das Bestimmen des Weiterleitungsbereichs (BS1; BS2 am ersten Empfangsknoten (F1, NF) erfolgt.

4. Verfahren nach mindestens einem der Ansprüche 1 bis 3, **dadurch gekennzeichnet, dass** das Bestimmen des Weiterleitungsbereichs (BS1; BS2) ferner auf der Grundlage der Position des Sendeknoten (S; F1), einer Position eines Referenzpunkts, einer Position von einem oder mehreren Verkehrsnetzschnittpunkten, einer Position von einem oder mehreren stationären Knoten des Kommunikationsnetzes und/oder von Netztopologieinformation erfolgt,
wobei, wenn das Bestimmen des Weiterleitungsbereichs (BS1; BS2) am ersten Empfangsknoten (F1; NF) und weiter auf der Grundlage der Position des Sendeknotens (S; F1) erfolgt, die Position des Sendeknotens (S; F1) durch Senderpositionsdaten angegeben wird, die vom Sendeknoten (S; F1) am ersten Empfangsknoten (F1; NF) empfangen werden; und
wobei das Kommunikationsnetz ein fahrzeug-mobiles Ad-hoc-Netz ist, das Netzknoten umfasst, die in Fahrzeugen eines Verkehrsnetzes angebracht sind, wobei die Netztopologieinformation Navigationsdaten umfasst, die eine Verkehrsnetztopologie des Verkehrsnetzes und/oder digitale Kartendaten angeben.

5. Verfahren nach Anspruch 4, **dadurch gekennzeichnet, dass** der Weiterleitungsbereich (BS1; BS2) so bestimmt wird, dass er einen Bereich von einem oder mehreren Verkehrsnetzschnittpunkten des Verkehrsnetzes abdeckt, wobei die Position des einen oder der mehreren Verkehrsnetzschnittpunkte von den Navigationsdaten angegeben wird.

6. Verfahren nach mindestens einem der Ansprüche 1 bis 5, **dadurch gekennzeichnet, dass** der Weiterleitungsbereich (BS1; BS2) so bestimmt wird, dass er von der Position des Sendeknotens (S; F1) in Richtung der Position des Ziels (D) gerichtet wird.

7. Verfahren nach mindestens einem der Ansprüche 1 bis 6, **dadurch gekennzeichnet, dass** der bestimmte Weiterleitungsbereich (BS1; BS2) im Wesentlichen einem kreisförmigen Sektor der kreisförmigen Kommunikationsreichweite (Rmax) des Sendeknotens (S; F1) entspricht, der den Sendeknoten (S; F1) in der Mitte mit einem Radius gemäß der Kommunikationsreichweite (Rmax) des Sendeknotens (S; F1) hat.

8. Verfahren nach mindestens einem der Ansprüche 1 bis 7, **dadurch gekennzeichnet, dass** der Weiterleitungsbereich (BS1; BS2) so bestimmt wird, dass er von der Position des Sendeknotens (S; F1) in Richtung der Position des Ziels (D) gerichtet wird, indem das Bestimmen des Weiterleitungsbereichs (BS1; BS2) das Berechnen einer Position eines Schnittpunkts (P1; P2) umfasst, der der geometrische Schnittpunkt zwischen der Grenze der Kommunikationsreichweite des Sendeknotens (S; F1) und einer geraden Linie zwischen der Position des Sendeknotens (S; F1) und der Position des Ziels (D) ist.

9. Verfahren nach mindestens einem der vorstehenden Ansprüche, **dadurch gekennzeichnet, dass** der Weiterleitungsbereich (BS1; BS2) im Wesentlichen einem kreisförmigen Sektor der kreisförmigen Kommunikationsreichweite des Sendeknotens (S; F1) entspricht, der den Sendeknoten (S; F1) in der Mitte mit einem Radius gemäß der Kommunikationsreichweite (Rmax) des Sendeknotens (S; F1) hat, wobei das Bestimmen des Weiterleitungsbereichs (BS1; BS2) das Bestimmen des Öffnungswinkels (α) des Weiterleitungsbereichs (BS1; BS2) auf der Grundlage der bestimmten Positionen von Nachbarknoten des ersten Empfangsknotens (F1; NF), der Dichte von Nachbarknoten des ersten Empfangsknotens (F1; NF) und/oder auf der Grundlage eines minimalen Öffnungswinkel-Standardwerts umfasst.

10. Verfahren nach mindestens einem der vorstehenden Ansprüche, ferner **gekennzeichnet durch**
- Bestimmen der Position von Nachbarknoten des ersten Empfangsknotens (B4), wenn der erste Empfangsknoten (B4) das Datenpaket empfängt, das von einem zweiten Empfangsknoten (F1) nach dem Empfangen des Datenpakets vom Sendeknoten (S) vor dem Senden des Datenpakets weitergeleitet wird,
- Bestimmen, ob sich die Nachbarknoten des ersten Empfangsknotens (B4) in Kommunikationsreichweite des zweiten Empfangsknotens (F1) befinden, und
- Senden des vom Sendeknoten (S) empfangenen Datenpakets an Nachbarknoten (S, B1, B2, B3, C1, C2, F1, R) des ersten Empfangsknotens (B4), wenn sich der erste Empfangsknoten (B4) innerhalb des bestimmten Weiterleitungsbereichs (BS1) befindet und sich zumindest einer der Nachbarknoten (C1, C2, C3) des ersten Empfangsknotens (B4) außerhalb der Kommunikationsreichweite des zweiten Empfangsknotens (F1) befindet, oder
- Unterlassen des Sendens des Datenpakets an Nachbarknoten des ersten Empfangsknotens (B4), wenn sich alle Nachbarknoten des ersten Empfangsknotens (F1) innerhalb der Kommunikationsreichweite des zweiten Empfangsknotens (F1) befinden.

11. Verfahren nach mindestens einem der vorstehenden Ansprüche, ferner **gekennzeichnet durch**:
- Bestimmen eines ersten Sender-Empfänger-Abstands, wobei der erste Sender-Empfänger-Abstand einen Abstand zwischen der Position des Sendeknotens (S) und der Position des ersten Empfangsknotens (F1) angibt, und/oder Bestimmen eines ersten Ziel-Empfänger-Abstands, wobei der erste Ziel-Empfänger-Abstand einen Abstand zwischen der Position des ersten Empfangsknotens (F1) und der Position des Ziels (D) oder zwischen der Position des ersten Empfangsknotens (F1) und einer Position eines Zwischenzielbezugspunkts angibt,
- Empfangen des vom Sendeknoten (S) gesendeten Datenpakets an einem zweiten Empfangsknoten (B2),
- Bestimmen einer Position des zweiten Empfangsknotens (B2), und
- Bestimmen eines zweiten Sender-Empfänger-Abstands, wobei der zweite Sender-Empfänger-Abstand einen Abstand zwischen der Position des Sendeknotens (S) und der Position des zweiten Empfangsknotens (B2) angibt, und/oder Bestimmen eines zweiten Ziel-Empfänger-Abstands, wobei der zweite Ziel-Empfänger-Abstand einen Abstand zwischen der Position des zweiten Empfangsknotens (B2) und der Position des Ziels (D) oder zwischen der Position des zweiten Empfangsknotens (B2) und einer Position eines Zwischenzielbezugspunkts angibt,
wobei der erste Empfangsknoten (F1) das Datenpaket an einen oder mehrere Nachbarknoten des ersten Empfangsknotens (F1) sendet, wenn der erste Sender-Empfänger-Abstand größer als der zweite Sender-Empfänger-Abstand ist, und/oder wobei der erste Empfangsknoten (F1) das Datenpaket an einen oder mehrere Nachbarknoten des ersten Empfangsknotens (F1) sendet, wenn der erste Ziel-Empfänger-Abstand kleiner als der zweite Ziel-Empfänger-Abstand ist, und
wobei es der zweite Empfangsknoten (B2) unterlässt, das Datenpaket weiterzuleiten,
wenn der zweite Empfangsknoten (B2) das weitergeleitete Datenpaket vom ersten Empfangsknoten (F1) empfängt, selbst wenn sich der zweite Empfangsknoten (B2) innerhalb des bestimmten Weiterleitungsbereichs (BS1) befindet, und, oder
wenn der zweite Empfangsknoten (B2) das weitergeleitete Datenpaket vom ersten Empfangsknoten (F1) empfängt und wenn sich alle Nachbarknoten des zweiten Empfangsknotens (B2) in Kommunikationsreichweite des ersten Empfangsknotens (F1) befinden, selbst wenn sich der zweite Empfangsknoten (B2) innerhalb des bestimmten Weiterleitungsbereichs (BS1) befindet.

12. Verfahren nach mindestens einem der vorstehenden Ansprüche, **dadurch gekennzeichnet, dass** in einem Fall, in dem bestimmt wird, dass der erste Empfangsknoten (F1; NF) das Datenpaket an einen oder mehrere Nachbarknoten (B1, B2, B3, S, NF; B3, F1) des ersten Empfangsknotens (F1; NF) weiterleiten soll, das Verfahren ferner umfasst:
- Bestimmen am ersten Empfangsknoten, ob ein nächster Weiterleitungsknoten auf der Grundlage eines empfängerbasierten Bestimmungsvorgangs oder auf der Grundlage eines senderbasierten Bestimmungsvorgangs bestimmt werden soll, wobei ein nächster Weiterleitungsknoten ein Knoten ist, der das Datenpaket nach dem Empfang des Datenpakets vom ersten Empfangsknoten (F1; NF) weiterleitet,
wobei gemäß eines empfängerbasierten Bestimmungsvorgangs der erste Empfangsknoten (F1; NF) das Datenpaket an alle seine Nachbarknoten (B1, B2, B3, S, NF; B3, F1) sendet, die nach dem Empfang des Datenpakets vom ersten Empfangsknoten (F1, NF) bestimmen, ob das Datenpaket weitergeleitet werden soll, und
gemäß einem senderbasierten Bestimmungsvorgang der erste Empfangsknoten (F1; NF) bestimmt, welcher seiner Nachbarknoten (B1, B2, B3, S, NF; B3, F1) als nächster Weiterleitungsknoten zum weiteren Weiterleiten des Datenpakets agieren soll.

13. Verfahren nach Anspruch 12, **dadurch gekennzeichnet, dass** gemäß einem senderbasierten Bestimmungsvorgang das vom ersten Empfangsknoten (F1; NF) gesendete Datenpaket Identifizierungsdaten beinhaltet, die einen oder mehrere der Nachbarknoten (B1, B2, B3, S, NF; B3, F1) des ersten Empfangsknotens (F1; NF) als nächsten Weiterleitungsknoten bestimmt identifizieren, wobei die Nachbarknoten (B1, B2, B3, S, NF; B3, F1) des ersten Empfangsknotens (F1; NF) nach Empfangen des Datenpakets vom ersten Empfangsknoten (F1; NF) auf der Grundlage der Identifikationsdaten bestimmen, ob das Datenpaket weitergeleitet werden soll.

14. Verfahren nach Anspruch 12 oder 13, **dadurch gekennzeichnet, dass** das Bestimmen, ob ein nächster Weiterleitungsknoten auf der Grundlage eines empfängerbasierten Bestimmungsvorgangs oder auf der Grundlage eines senderbasierten Bestimmungsvorgangs bestimmt werden soll, auf der Grundlage von zumindest einem von Kommunikationsnetzbedingungen und Kommunikationsnetzqualität, einer Knotendichte, Datenverteilungszeitbeschränkungen, Verfügbarkeit von Positionsdaten, die Positionen von Nachbarknoten angeben, Zuverlässigkeit von Positionsdaten, die Positionen von Nachbarknoten angeben, Positionsdaten, die stationäre Knoten angeben, oder Daten, die einen oder mehrere Nachbarknoten als stationäre Knoten angeben, erfolgt.

15. Verfahren nach mindestens einem der vorstehenden Ansprüche, **dadurch gekennzeichnet, dass**
der erste Empfangsknoten (F1; NF) bis zum Ablauf eines Zeit-zu-senden-Zeitraums nach Empfang des Datenpakets vom Sendeknoten (S; F1) wartet, welcher Zeit-zu-Senden-Zeiträum auf der Basis von zumindest zwei der Position des Sendeknotens, der Position des Ziels (D) und der Position des ersten Empfangsknotens (F1; NF) bestimmt wird,
wobei es der erste Empfangsknoten (F1; NF) unterlässt, das Datenpaket an einen oder mehrere Nachbarknoten (B1, B2, B3, S, NF; B3, F1) des ersten Empfangsknotens (F1; NF) weiterzuleiten, wenn das Datenpaket, das von einem anderen Knoten als dem Sendeknoten (S; F1) vor dem Ablauf des Zeit-zu-Senden-Zeitraums gesendet wird, am ersten Empfangsknoten (F1, NF) wieder empfangen wird.

16. Verfahren nach mindestens einem der vorstehenden Ansprüche, ferner **gekennzeichnet durch**:
- Bestimmen am ersten Empfangsknoten (F1; NF), ob das Ziel (D) erreicht ist, und
- Weiterleiten des Datenpakets an alle Nachbarknoten (B1, B2, B3, S, NF; B3, F1) des ersten Empfangsknotens (F1; NF), wenn bestimmt wird, dass das Ziel (D) erreicht ist,
wobei das Ziel (D) einer Zielposition entspricht und es bestimmt wird, dass das Ziel (D) erreicht ist, wenn der Abstand zwischen der Position des ersten Empfangsknotens (F1; NF) und der Position des Ziels (D) kleiner als ein vorgegebener Schwellenabstand ist, oder
das Ziel (D) einem Zielbereich entspricht und es bestimmt wird, dass das Ziel (D) erreicht ist, wenn sich der erste Empfangsknoten (F1; NF) innerhalb des Zielbereichs befindet.

17. Vorrichtung zum Verteilen von Daten gemäß einem Verfahren nach mindestens einem der vorstehenden Ansprüche in einem Kommunikationsnetz mit mehreren Netzknoten, wobei die Vorrichtung dazu ausgelegt ist, an einem ersten Empfangsknoten der mehreren Netzknoten angebracht zu sein, und Folgendes umfasst:
- eine Empfangseinrichtung (110) zum Empfangen eines von einem Sendeknoten (S; F1) gesendeten Datenpakets am ersten Empfangsknoten (F1; NF), welches Datenpaket an ein Ziel (D) weitergeleitet werden soll,
- eine Empfängerposition-Bestimmungseinrichtung (120) zum Bestimmen einer Position des ersten Empfangsknotens (F1; NF),
- eine Einrichtung (162; 162) zum Bestimmen der Positionen von Nachbarknoten des ersten Empfangsknotens (F1; NF) und/oder der Dichte von Nachbarknoten des ersten Empfangsknotens (F1; NF),
- eine Weiterleitungsbereich-Bestimmungseinrichtung (140) zum Bestimmen eines Weiterleitungsbereichs (BS1; BS2) auf der Grundlage einer Position des Ziels (D);
- eine Weiterleitungsbestimmungseinrichtung zum Bestimmen, ob das Datenpaket an einen oder mehrere Nachbarknoten (B1, B2, B3, S, NF; B3, F1) des ersten Empfangsknotens (F1; NF) auf der Basis einer Bestimmung, ob sich der erste Empfangsknoten (F1; NF) innerhalb des bestimmten Weiterleitungsbereichs (BS1; BS2) befindet, weitergeleitet werden soll, und
- eine Sendeeinrichtung (150) zum Weiterleiten des Datenpakets an einen oder mehrere Nachbarknoten des ersten Empfangsknotens,
wobei die Weiterleitungsbereich-Bestimmungseinrichtung dazu eingerichtet ist, den Weiterleitungsbereich (BS1; BS2) so zu bestimmen, dass die Größe des Weiterleitungsbereichs (BS1; BS2) auf der Grundlage der bestimmten Positionen von Nachbarknoten des ersten Empfangsknotens (F1; NF) und/oder der Dichte von Nachbarknoten des ersten Empfangsknotens (F1; NF) bestimmt wird.

18. Computerprogrammprodukt mit einer Computerprogrammcodeeinrichtung, die dazu konfiguriert ist, eine Vorrichtung zum Verteilen von Daten in einem Kommunikationsnetz mit mehreren Netzknoten anzupassen, insbesondere eine Vorrichtung zum Verteilen von Daten in einem Kommunikationsnetz, das Sendeeinrichtungen, Empfangseinrichtungen, Speichereinrichtungen und Verarbeitungseinrichtungen umfasst, so dass die Vorrichtung dazu ausgelegt ist, ein Verfahren zum Verteilen von Daten in einem Kommunikationsnetz mit mehreren Netzknoten gemäß mindestens einem der Ansprüche 1 bis 16 durchzuführen.

## Revendications

1. Procédé pour diffuser des données dans un réseau de communication comportant une pluralité de noeuds de réseau, comportant les étapes consistant à:
- recevoir, dans un premier noeud de réception (F1 ; NF), un paquet de données envoyé depuis un noeud d'émission (S ; F1) lequel doit être acheminé vers une destination (D),
- déterminer une position du premier noeud de réception (F1 ; NF),
- déterminer des positions de noeuds voisins du premier noeud de réception (F1 ; NF) et/ou de la densité de noeuds voisins du premier noeud de réception (F1 ; NF),
- déterminer une zone d'acheminement (BS1 ; BS2) sur la base d'une position de la destination (D),
- déterminer si le premier noeud de réception (F1 ; NF) est localisé à l'intérieur de la zone d'acheminement déterminée (BS1 ; BS2), et,
- déterminer, dans le premier noeud de reception (F1 ; NF), si il faut acheminer le paquet de données de sorte que le paquet de données peut être reçu par un ou plusieurs noeuds voisins (B1, B2, B3, S, NF ; B3, F1) du premier noeud de réception (F1 ; NF), sur la base d'une détermination visant à déterminer si le premier noeud de réception (F1 ; NF) est localisé à l'intérieur de la zone d'acheminement déterminée (BS1 ; BS2),
dans lequel la zone d'acheminement (BS1 ; BS2) est déterminée de sorte que la taille de la zone d'acheminement (BS1 ; BS2) est déterminée sur la base des positions déterminées de noeuds voisins du premier noeud de réception (F1 ; NF) et/ou de la densité de noeuds voisins du premier noeud de réception (F1 ; NF).

2. Procédé selon la revendication 1, **caractérisé en ce que**
le premier noeud de réception (F1 ; NF) achemine le paquet de données vers un ou plusieurs noeuds voisins (B1, B2, B3, S, NF ; B3, F1) du premier noeud de réception (F1 ; NF) si le premier noeud de réception (F1 ; NF) est localisé à l'intérieur de la zone d'acheminement déterminée (BS1 ; BS2).

3. Procédé selon la revendication 1 ou 2, **caractérisé en ce que**
ladite détermination de la zone d'acheminement (BS1 ; BS2) est exécutée dans le noeud d'émission (S ; F1), dans lequel les données de la zone d'acheminement envoyées depuis le noeud d'émission (S ; F1) sont reçues dans le premier noeud de réception (F1 ; NF), lesdites données de la zone d'acheminement indiquant la zone d'acheminement déterminée (BS1 ; BS2), ou
ladite détermination de la zone d'acheminement (BS1 ; BS2) est exécutée dans le premier noeud de réception (F1 ; NF).

4. Procédé selon au moins l'une des revendications 1 à 3, **caractérisé en ce que**
ladite détermination de la zone d'acheminement (BS1 ; BS2) est effectuée en outre sur la base de la position du noeud d'émission (S ; F1), d'une position d'un point de référence, d'une position d'une ou plusieurs intersections de réseau de trafic, d'une position d'un ou plusieurs noeuds stationnaires du réseau de communication et/ou d'informations de topologie du réseau,
dans lequel, si ladite détermination de la zone d'acheminement (BS1 ; BS2) est effectuée dans le premier noeud de réception (F1 ; NF) et en outre basée sur la position du noeud d'émission (S ; F1), la position du noeud d'émission (S ; F1) est indiquée par les données de position de l'émetteur reçues dans le premier noeud de réception (F1 ; NF) en provenance du noeud d'émission (S ; F1), et
dans lequel le réseau de communication est un réseau ad hoc mobile véhiculaire comportant dés noeuds de réseau montés sur des véhicules d'un réseau de trafic, dans lequel lesdites informations de topologie de réseau comportent des données de navigation indiquant une topologie du réseau de trafic du réseau de trafic et/ou des données de cartes numériques.

5. Procédé selon la revendication 4, **caractérisé en ce que** la zone d'acheminement (BS1 ; BS2) est déterminée de sorte qu'elle recouvre une zone d'une ou plusieurs intersections de réseau de trafic du réseau de trafic, la position d'une ou plusieurs intersections de réseau de trafic étant indiquée par les données de navigation.

6. Procédé selon au moins l'une des revendications 1 à 5, **caractérisé en ce que**
la zone d'acheminement (BS1 ; BS2) est déterminée de sorte qu'elle est dirigée depuis la position du noeud d'émission (S ; F1) vers la position de la destination (D).

7. Procédé selon au moins l'une des revendications 1 à 6, **caractérisé en ce que**
la zone d'acheminement déterminée (BS1 ; BS2) correspond sensiblement à un secteur circulaire de la plage de communication circulaire (Rmax) du noeud d'émission (S ; F1) ayant le noeud d'émission (S ; F1) au centre avec un rayon conformément à la plage de communication (Rmax) du noeud d'émission (S ; F1).

8. Procédé selon au moins l'une des revendications 1 à 7, **caractérisé en ce que**
la zone d'acheminement (BS1 ; BS2) est déterminée de sorte qu'elle est dirigée depuis la position du noeud d'émission (S ; F1) vers la position de la destination (D) et **en ce que** la détermination de la zone d'acheminement (BS1 ; BS2) comporte de calculer une position d'un point d'intersection (P1 ; P2) lequel est l'intersection géométrique entre le bord de la plage de communication du noeud d'émission (S ; F1) et une ligne droite entre la position d'un noeud d'émission (S ; F1) et la position de la destination (D).

9. Procédé selon au moins l'une des revendications précédentes, **caractérisé en ce que**
la zone d'acheminement (BS1 ; BS2) correspond sensiblement à un secteur circulaire de la plage de communication circulaire du noeud d'émission (S ; F1) ayant le noeud d'émission (S ; F1) au centre avec un rayon conformément à la plage de communication (Rmax) du noeud d'émission (S ; F1), dans lequel la détermination de la zone d'acheminement (BS1 ; BS2) comporte de déterminer l'angle d'ouverture (α) de la zone d'acheminement (BS1 ; BS2) sur la base des positions déterminées de noeuds voisins du premier noeud de réception (F1 ; NF), de la densité de noeuds voisins du premier noeud de réception (F1 ; NF), et/ou sur la base d'une valeur par défaut d'un angle d'ouverture minimale.

10. Procédé selon au moins l'une des revendications précédentes, **caractérisé en outre par** les étapes consistant à :
- déterminer la position de noeuds voisins du premier noeud de réception (B4), lorsque le premier noeud de réception (B4) reçoit le paquet de données acheminé depuis un second noeud de réception (F1) après la réception du paquet de données en provenance du noeud d'émission (S) avant l'envoi du paquet de données,
- déterminer si les noeuds voisins du premier noeud de réception (B4) sont localisés dans la plage de communication du second noeud de réception (F1), et
- envoyer le paquet de données reçu en provenance du noeud d'émission (S) à des noeuds voisins (S, B1, B2, B3, Cl, C2, F1, R) du premier noeud de réception (B4), si le premier noeud de réception (B4) est positionné à l'intérieur de la zone d'acheminement déterminée (BS1) et au moins l'un des noeuds voisins (C1, C2, C3) du premier noeud de réception (B4) est localisé à l'extérieur de la plage de communication du second noeud de réception (F1), ou
- empêcher l'envoi du paquet de données à des noeuds voisins du premier noeud de réception (B4), si tous les noeuds voisins du premier noeud de réception (F1) sont localisés à l'intérieur de la plage de communication du second noeud de réception (F1).

11. Procédé selon au moins l'une des revendications précédentes, **caractérisé en outre en ce qu'**il comporte les étapes consistant à:
déterminer une première distance émetteur - récepteur, la première distance émetteur - récepteur indiquant une distance entre la position du noeud d'émission (S) et la position du premier noeud de réception (F1) et/ou déterminer une première distance destination - récepteur, la première distance destination - récepteur indiquant une distance entre la position du premier noeud de réception (F1) et la position de la destination (D) ou entre la position du premier noeud de réception (F1) et une position du point de référence de destination intermédiaire,
- recevoir, dans un second noeud de réception (B2), le paquet de données envoyé depuis le noeud d'émission (S),
- déterminer une position du second noeud de réception (B2), et
- déterminer une seconde distance émetteur - récepteur, la seconde distance émetteur - récepteur indiquant une distance entre la position du noeud d'émission (S) et la position du second noeud de réception (B2) et/ou déterminer une seconde distance destination - récepteur, la seconde distance destination - récepteur indiquant une distance entre la position du second noeud de réception (B2) et la position de la destination (D) ou entre la position du second noeud de réception (B2) et une position du point de référence de destination intermédiaire,
dans lequel le premier noeud de réception (F1) envoie le paquet de données à un ou plusieurs noeuds voisins du premier noeud de réception (F1), si la première distance émetteur - récepteur est supérieure à la seconde distance émetteur - récepteur et/ou dans lequel le premier noeud de réception (F1) envoie le paquet de données à un ou plusieurs noeuds voisins du premier noeud de réception (F1), si la première distance destination - récepteur est inférieure à la seconde distance destination - récepteur, et
dans lequel le second noeud de réception (B2) empêche d'acheminer le paquet de données,
lorsque le second noeud de réception (B2) reçoit le paquet de données acheminé en provenance du premier noeud de réception (F1), même si le second noeud de réception (B2) est localisé à l'intérieur de la zone d'acheminement déterminée (BS1) ou
lorsque le second noeud de réception (B2) reçoit le paquet de données acheminé en provenance du premier noeud de réception (F1) et si tous les noeuds voisins du second noeud de réception (B2) sont localisés dans la plage de communication du premier noeud de réception (F1), même si le second noeud de réception (B2) est localisé à l'intérieur de la zone d'acheminement déterminée (BS1).

12. Procédé selon au moins l'une des revendications précédentes, **caractérisé en ce que**
dans un cas dans lequel il est déterminé que le premier noeud de réception (F1 ; NF) doit acheminer le paquet de données vers un ou plusieurs noeuds voisins (B1, B2, B3, S, NF ; B3, F1) du premier noeud de réception (F1 ; NF), le procédé comporte en outre les étapes consistant à:
- déterminer, dans le premier noeud de réception, si un noeud d'acheminement suivant doit être déterminé sur la base d'un processus de détermination basé sur un récepteur ou sur la base d'un processus de détermination basé sur un émetteur, un noeud d'acheminement suivant étant un noeud qui achemine le paquet de données après la réception du paquet de données en provenance du premier noeud de réception (F1 ; NF),
dans lequel conformément à un processus de détermination basé sur un récepteur, le premier noeud de réception (F1 ; NF) envoie le paquet de données à la totalité de ses noeuds voisins (B1, B2, B3, S, NF ; B3, F1) lesquels, après la réception du paquet de données en provenance du premier noeud de réception (F1 ; NF) déterminent s'il faut acheminer le paquet de données, et
conformément à un processus de détermination basé sur un émetteur, le premier noeud de réception (F1 ; NF) détermine lequel de ses noeuds voisins (B1, B2, B3, S, NF ; B3, F1) doit agir en tant que noeud d'acheminement suivant pour un acheminement supplémentaire dû paquet de données.

13. Procédé selon la revendication 12, **caractérisé en ce que**
conformément à un processus de détermination basé sur un émetteur, le paquet de données envoyé depuis le premier noeud de réception (F1 ; NF) inclut des données d'identification identifiant un ou plusieurs des de voisins (B1, B2, B3, S, NF ; B3, F1) du premier noeud de réception (F1 ; NF) comme étant déterminé en tant que noeud d'acheminement suivant, dans lequel les noeuds voisins (B1, B2, B3, S, NF; B3, F1) du premier noeud de réception (F1 ; NF), après la réception du paquet de données en provenance du premier noeud de réception (F1 ; NF) déterminent s'il faut acheminer le paquet de données sur la base des données d'identification.

14. Procédé selon la revendication 12 ou 13, **caractérisé en ce que**
l'étape consistant à déterminer si un noeud d'acheminement suivant doit être déterminé sur la base d'un processus de détermination basé sur un récepteur ou sur la base d'un processus de détermination basé sur un émetteur est exécutée sur la base d'au moins l'une parmi des conditions de réseau de communication et une qualité de réseau de communication, une densité de noeuds, des contraintes de temps de diffusion de données, une disponibilité de données de position indiquant des positions de noeuds voisins, une fiabilité de données de position indiquant des positions de noeuds voisins, des données de position indiquant des noeuds stationnaires, ou des données indiquant un ou plusieurs noeuds voisins comme étant des noeuds stationnaires.

15. Procédé selon au moins l'une des revendications précédentes, **caractérisé en ce que**
le premier noeud de réception (F1 ; NF) attend jusqu'à l'expiration d'une période d'heure d'émission après la réception du paquet de données en provenance du noeud d'émission (S ; F1), laquelle période d'heure d'émission est déterminée sur la base d'au moins deux parmi la position du noeud d'émission, la position de la destination (D) et la position du premier noeud de réception (F1 ; NF),
dans lequel le premier noeud de réception (F1 ; NF) empêche l'acheminement du paquet de données à un ou plusieurs noeuds voisins (B1, B2, B3, S, NF ; B3, F1) du premier noeud de réception (F1 ; NF), si le paquet de données est reçu à nouveau dans le premier noeud de réception (F1 ; NF) envoyé depuis un noeud autre que le noeud d'émission (S ; F1) avant l'expiration de la période d'heure d'émission.

16. Procède selon au moins l'une des revendications précédentes, **caractérisé en outre par** les étapes consistant à:
- déterminer, dans le premier noeud de réception (F1 ; NF) si la destination (D) est atteinte, et
- acheminer le paquet de données à tous les noeuds voisins (B1, B2, B3, S, NF ; B3, F1) du premier noeud de réception (F1 ; NF), si il est déterminé que la destination (D) est atteinte,
dans lequel la destination (D) correspond à une position de destination et il est déterminé que la destination (D) est atteinte si la distance entre la position du premier noeud de réception (F1 ; NF) et la position de la destination (D) est inférieure à une distance de seuil prédéterminée, ou
la destination (D) correspond à une zone de destination et il est déterminé que la destination (D) est atteinte si le premier noeud de réception (F1 ; NF) est localisé à l'intérieur de la zone de destination.

17. Dispositif pour diffuser des données conformément à un procédé selon au moins l'une des revendications précédentes dans un réseau de communication comportant une pluralité de noeuds de réseau, ledit dispositif étant adapté pour être monté sur un premier noeud de réception de la pluralité de noeuds de réseau et comportant:
- des moyens de réception (110) pour recevoir, dans le premier noeud de réception (F1 ; NF), un paquet de données envoyé depuis un noeud d'émission (S ; F1), lequel paquet de données doit être acheminé à une destination (D),
- des moyens de détermination de position de récepteur (120) pour déterminer une position du premier noeud de réception (F1 ; NF),
- des moyens de détermination des positions de noeuds voisins du premier noeud de réception (F1 ; NF) et/ou de la densité de noeuds voisins du premier noeud de réception (F1 ; NF),
- des moyens de détermination de zone d'acheminement (140) pour déterminer une zone d'acheminement (BS1 ; BS2) sur la base d'une position de la destination (D),
- des moyens de détermination d'acheminement pour déterminer s'il faut acheminer le paquet de données à un ou plusieurs noeuds voisins (B1, B2, B3, S, NF ; B3, F1) du premier noeud de réception (F1 ; NF) sur la base d'une détermination visant à déterminer si le premier noeud de réception (F1 ; NF) est localisé à l'intérieur de la zone d'acheminement déterminée (BS1 ; BS2), et
- des moyens d'émission (150) pour acheminer le paquet de données à un ou plusieurs noeuds voisins du premier noeud de réception,
dans lequel des moyens de détermination des positions de noeuds voisins sont adapté à déterminer la zone d'acheminement (BS1 ; BS2) de sorte que la taille de la zone d'acheminement (BS1 ; BS2) est déterminée sur la base des positions déterminées de noeuds voisins du premier noeud de réception (F1 ; NF) et/ou de la densité de noeuds voisins du premier noeud de réception (F1 ; NF).

18. Produit de programme informatique comportant des moyens de code de programme informatique configurés pour adapter un dispositif pour diffuser des données dans un réseau de communication comportant une pluralité de noeuds de réseau, en particulier un dispositif pour diffuser des données dans un réseau de communication qui comporte des moyens d'émission, des moyens de réception, des moyens de mémoire, et des moyens de traitement, de sorte que le dispositif est adapté pour mettre en oeuvre un procédé pour diffuser des données dans un réseau de communication comportant une pluralité de noeuds de réseau conformément à au moins l'une des revendications 1 à 16.
